Europäisches Patentamt

European Patent Office

Office européen des brevets

(19)

(11)  EP 1 031 945 A2

(12)  EUROPEAN PATENT APPLICATION

(43) Date of publication:
30.08.2000  Bulletin 2000/35

(51) Int Cl.⁷: **G06T 15/70**

(21) Application number: 00301539.3

(22) Date of filing: 25.02.2000

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Murata, Katsuyuki**<br>  **Minato-ku, Tokyo (JP)**<br>• **Doi, Miwako**<br>  **Minato-ku, Tokyo (JP)**<br>• **Ida, Takashi**<br>  **Minato-ku, Tokyo (JP)** |
| (30) Priority: 26.02.1999 JP 5093199<br>13.10.1999 JP 29089099 | |
| | (74) Representative: **Granleese, Rhian Jane**<br>**Marks & Clerk,**<br>**57-60 Lincoln's Inn Fields**<br>**London WC2A 3LS (GB)** |
| (71) Applicant: **KABUSHIKI KAISHA TOSHIBA**<br>**Kawasaki-shi Kanagawa-ken Tokyo (JP)** | |

(54)  **Animation creation apparatus and method**

(57)  A sound data extraction section (1) extracts a predetermined parameter from sound data. A figure memory (5) stores a plurality of character models. A motion data memory (6) stores motion data of each of the plurality of character models. A location data memory (3) stores location data of each of the plurality of character models in virtual space. An indication section (11) indicates a change in the location data of at least one of the plurality of character models by a user. An editing section (4) changes the motion data of each of the plurality of character models to be in cooperation with each other according to the predetermined parameter and the changed location data. A display section (10) displays the plurality of character models each moving according to the changed motion data.

FIG. 1

## Description

FIELD OF THE INVENTION

The present invention relates to an animation creation apparatus and a method to control a video image of a character model according to sound data.

BACKGROUND OF THE INVENTION

Because of the spread and high ability of personal computers, a personal user can easily enjoy and operate computer graphics and computer music. In this situation, each user desires an interactive tool to simultaneously enjoy audio and video and to easily create an original animation matched with the audio.

As an apparatus to create a computer art by sound and video, Japanese Patent Disclosure (Kokai) PH6-110452 is known. In this reference, an apparatus to determine graphic information according to performance data of musical instruments is disclosed. First, musical performance data of a digital sound source such as MIDI standard is inputted. MIDI standard represents a sheet music by binary code. From the musical performance data, a position, a color, a shape, a size, a direction, and a change speed of figure to be displayed is automatically determined. As a result, the computer art including the figure is created according to these data.

As an apparatus to create a computer animation by sound and video, Japanese Patent Disclosure (Kokai) PH9-91465 is known. In this reference, the figure and the motion data are interactively related with the sound by the user. In proportion to change of the sound, the figure is moving by changing the motion data related with the sound data. In this invention, the user can edit a relation between the sound, the figure and the motion data while playing the music. This edition is, for example, a change of the relation or an addition or a deletion of the relation. As a result, the user can create various kinds of animation for one music.

In this kind of apparatus of prior art, a relation between the sound data, the figure data, and the motion data is predetermined by a calculation equation or a correspondence table previously prepared. As long as the musical performance method is not changed, only one video is created from one music. Furthermore, a plurality of figures to be displayed are independently moved by the motion previously assigned to the sound. Therefore, the animation in which the plurality of figures are in cooperation with each other is not created.

As mentioned-above, in the animation creation apparatus of the prior art, various animation is not interactively edited / created by the user's feeling. Furthermore, the video of organized dance, i.e., a plurality of objects cooperatively moving to the music, is not created. In short, an animation creation environment including a low free degree of edition and a low representation power is only presented to the user.

SUMMARY OF THE INVENTION

It is an object of the present invention to provide an animation creation apparatus and method to cooperatively move a plurality of figures in space and time to music.

According to the present invention, there is provided an animation creation apparatus, comprising: sound data extraction means for extracting predetermined parameter from sound data; figure memory means for storing a plurality of character models to be displayed; motion data memory means for storing motion data of each of the plurality of character models; location data memory means for storing location data of each of the plurality of character models in virtual space to be displayed; indication means for indicating change of the location data of at least one of the plurality of character models; editing means for changing the motion data of each of the plurality of character models to be in cooperation with each other according to the predetermined parameter and the changed location data; and display means for displaying the plurality of the character models each moving according to the changed motion data.

Further in accordance with the present invention, there is also provided an animation creation apparatus, comprising: figure memory means for storing at least one character model to be displayed; motion data memory means for storing motion data of the one character model; indication means for indicating motion of the one character; editing means for moving the one character according to the motion data in response to the indication; object image memory means for storing a plurality of object images to compound on the one character; image composition means for selectively compounding each of the plurality of object images on the one character in synchronization with motion of the one character; and display means for displaying the motion of the one character on which the object image is compounded.

BRIEF DESCRIPTION OF THE DRAWINGS

Fig. 1 is a block diagram of an animation creation apparatus according to a first embodiment of the present invention.

Fig. 2 is a schematic diagram showing construction of a human model.

Fig. 3 is a schematic diagram showing a memory format in a figure data memory section in Fig. 1.

Fig. 4 is a schematic diagram of an example of a human model as the figure data.

Fig. 5 is a block diagram of a motion data creation section 8 in Fig. 1.

Fig. 6 is a schematic diagram of an example of the human model to which the user indicates a pose.

Fig. 7 is an example of a display of a motion data editing section of the first embodiment.

Fig. 8 is an example of a display of a motion created by the motion data editing section 82.

Fig. 9 is an example of pose data in a pose file.

Fig. 10 is an example of motion data in a motion file.

Fig. 11 is an example of location data on an XY plane.

Fig. 12 is an example of location of character model on an XY plane.

Fig. 13 is a block diagram of the editing section of the first embodiment.

Fig. 14 is an example of a display of a motion data relation interface as local location data in the first embodiment.

Fig. 15 is an example of a display of a motion data relation interface as general location data in the first embodiment.

Figs. 16A and 16B are examples of moving location of character models on an XY plane.

Fig 17 is a flow chart of processing of location change of character model in the first embodiment.

Fig. 18 is an example of three-dimensional locations of character models.

Fig. 19 is a flow chart of processing of a motion data change section 44 in the first embodiment.

Fig. 20 is a first example of the location of three character models.

Fig. 21 is a second example of the location of three character models.

Fig. 22 is a third example of the location of three character models.

Fig. 23 is a flow chart of processing of a motion generation section 45 in the first embodiment.

Fig. 24 is a time chart representing a relation between the motion and a tempo in the first embodiment.

Fig. 25 is a block diagram of the editing section 4 in a first modification of the first embodiment.

Fig. 26 is an example of a display of an interface in sound data / motion data relation section 46 in the first modification.

Fig. 27 is a flow chart of processing of the motion generation section 45 in the first modification.

Fig. 28 is a time chart representing a relation between a derived motion and the tempo in the first embodiment.

Fig. 29 is a block diagram of the editing section 4 in a second modification in the first embodiment.

Fig. 30 is an example of a display of an interface of an operation / motion data relation section 47 in the second modification.

Fig. 31 is a flow chart of processing of the motion data change section 44 in the second modification.

Fig. 32 is an example of a display presenting three human models.

Fig. 33 is a block diagram of the animation creation apparatus according to a second embodiment of the present invention.

Fig. 34 is an example of face image data in a face image memory section 50 in the second embodiment.

Fig. 35 is an example of a memory format in a face movie file of the face image memory section 50.

Fig. 36 is a block diagram of the editing section 4 in the second embodiment.

Fig. 37 is an example of a display of an interface of a figure data selection section 41 in the second embodiment.

Figs. 38A, 38B and 38C are examples of the face image put on a head plate by a figure change section 51 in the second embodiment.

Fig. 39 is a flow chart of processing of the figure change section 51 in the second embodiment.

Fig. 40 is an example of the back image of the head put on the head plate of the human model in the second embodiment.

Fig. 41 is an example of a cloth image put on a body plate of the human model in the second embodiment.

Fig. 42 is a block diagram of the animation creation apparatus according to a third embodiment of the present invention.

DETAILED DESCRIPTION OF THE PREFERRED EMBODIMENT

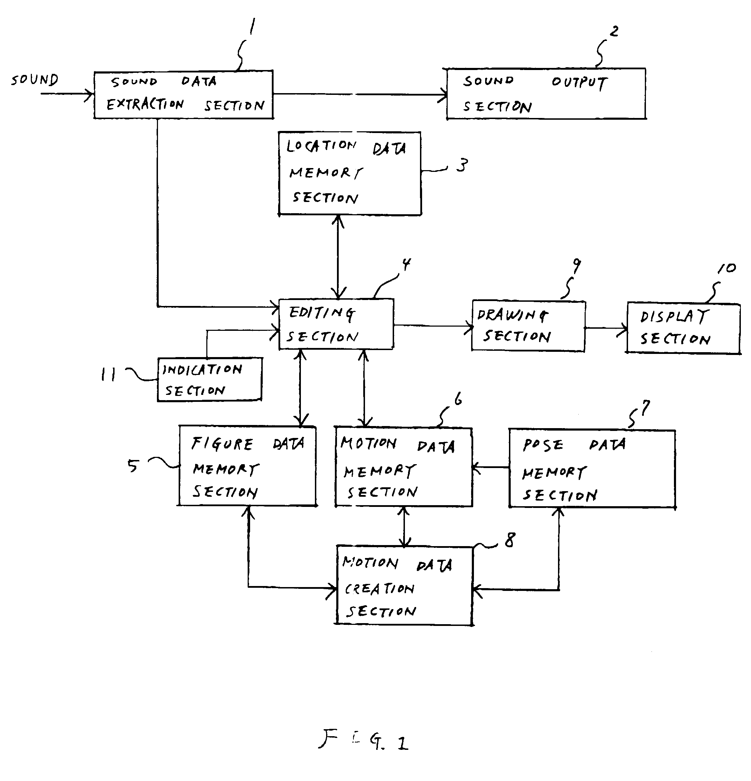

Fig. 1 is a block diagram of the animation creation apparatus according to the first embodiment of the present invention. The animation creation apparatus includes a sound data extraction section 1, a sound output section 2, a location data memory section 3, an editing section 4, a figure data memory section 5, a motion data memory section 6, a pose data memory section 7, a motion data creation section 8, a drawing section 9, a display section 10, an indication section 11.

For example, a MIDI signal is input to a digital sound source based on MIDI standard. The sound data extraction section 1 supplies the MIDI signal to the sound output section 2. In addition to this, the sound data extraction section 1 extracts sound data such as a tune performance data from the MIDI signal, and supplies the sound data to the editing section 4. The MIDI signal represents information to drive the digital sound source as serial binary code, consisting of tempo data for music progress, channel data for tone, musical interval data for musical pitch, musical intensity data for musical strength power, and effect sound data for musical effect. In the first embodiment, an example using the tempo data is explained.

The figure data memory section 5 previously stores figure data such as a character model to be displayed. The figure data includes not only two-dimensional figure data but also three-dimensional figure data. As a format of the three-dimensional figure data, in the first embodiment, X file format of Direct 3D (Microsoft corporation) as standard of three-dimensional computer graphics API is explained. As the three-dimensional figure data, the human character model is used. Objects such as head, arms, and legs of the human model are prepared as a file of X file format. In addition to this, a human body file (.chr) to recompound the objects as a human body is prepared.

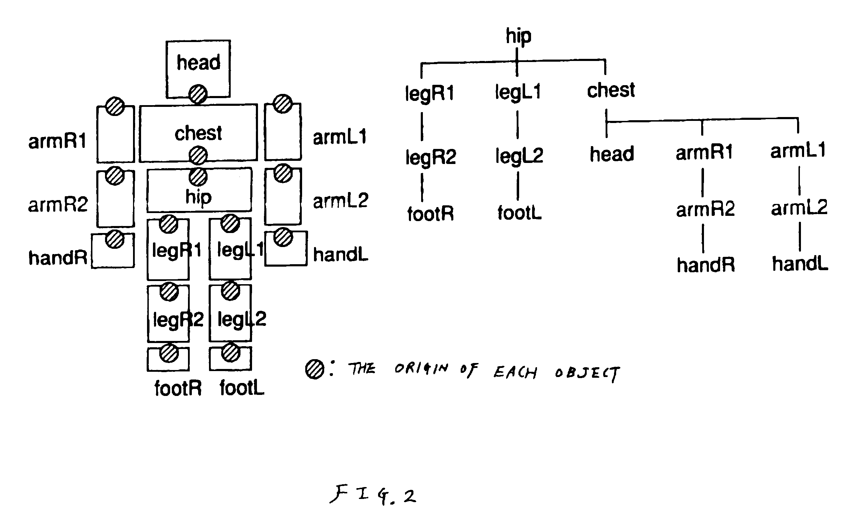

As shown in Fig. 2, the human model consists of fifteen objects as a hierarchical structure. In Fig. 2, a hip of the human model is set as a center point (root). In this hierarchical structure, when the hip is rotated, child objects belonged to the hip are dependently rotated. As a result, the whole body of the human model rotates.

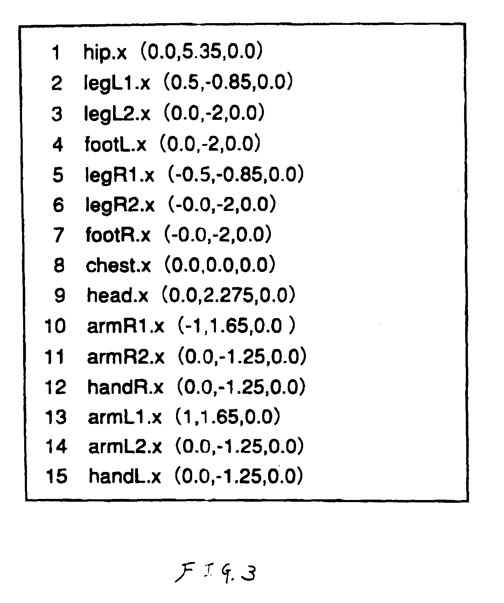

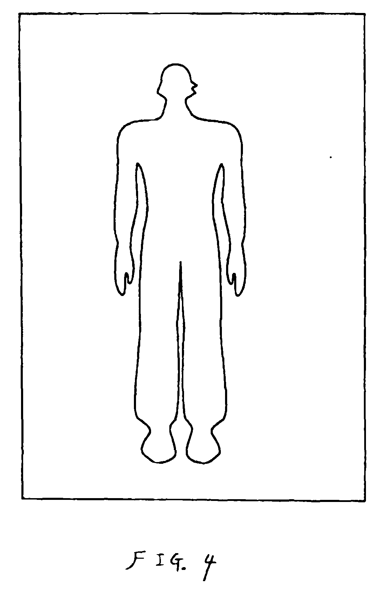

Fig. 3 shows an example of the human body file (model #1. chr) and Fig. 4 shows an example of a display of the human model. In Fig. 3, as for fifteen objects of the human model, X file name and the origin conversion data to recompound are described. At a first line in Fig. 3, hip data of the human model is described. X file name is hip. X. and the origin conversion data is (0.0, 5.35, 0.0). At a second line in Fig. 3, a left leg 1 (X file name is leg L1. X) is based on the hip as the parent object. By using the origin conversion data (0.5, -0.85, 0.0), the left leg 1 is moved while connecting to the hip. At a third line in Fig. 3, a left leg 2 (X file name is leg L2. X) is based on the origin of the left leg 1 as the parent object. By using the origin conversion data (0.0, -2, 0.0), the left leg 2 is moved while connecting to the left leg 1. In the first embodiment, the three-dimensional figure data is not limited to the X file format. DXF format in CAD region may be used. Otherwise, data format of three-dimensional figure created by various modeling software may be converted to X file format.

The motion data creation section 8 creates the motion data of the figure stored in the figure data memory section 5. In the first embodiment, the motion of the figure is created by a method of key frame animation. Therefore, different poses of one figure are created as key frames. The different poses are connected by arranging in order and preserved as a motion file.

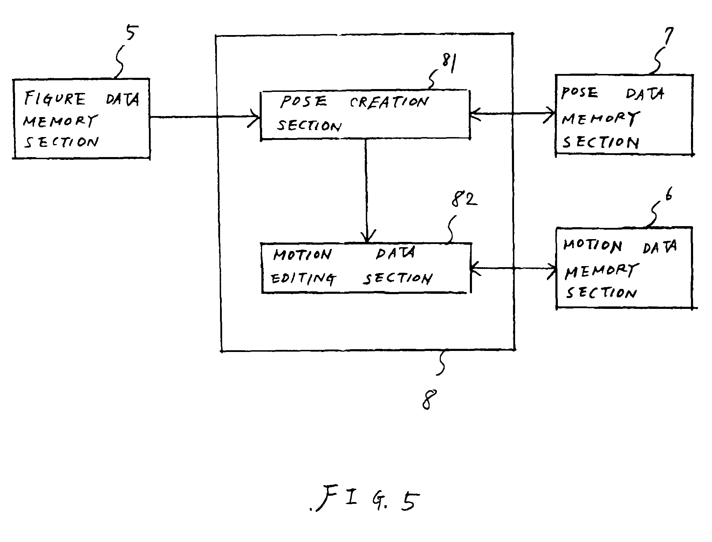

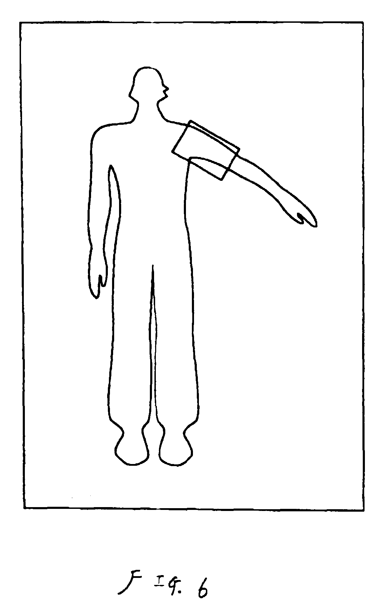

Fig. 5 is a block diagram of the motion data creation section 8. In Fig. 5, a pose creation section 81 reads the figure data stored in the figure data memory section 5, and assigns a pose to the figure. Fig. 6 is an example of a display of the pose assigned to the human model. A user can select each object of the human model by a mouse. The user assigns the pose to the selected object by key input operation such as an arrow key and a shift key of the indication section. For example, the selected object is converted as rotation and movement for X, Y, Z axis by the key input operation. As an object selection by the mouse, a detection of a cross point between a bounding box of the figure and a point of the mouse is executed as a picking operation. In Fig. 6, a left arm 1 of the human model is selected as a square part and rotated about the Z axis. As mentioned-above, each object of the human model is connected as hierarchical structure. Therefore, if the left arm 1 is rotated as shown in Fig. 6, a left arm 2 and a left hand as the child object are dependently rotated. The pose data created by this operation is stored as a pose file (extension is ".pse") in the pose data memory section 7. The user can retrieve the pose file and recreate the pose by the indication section 11.

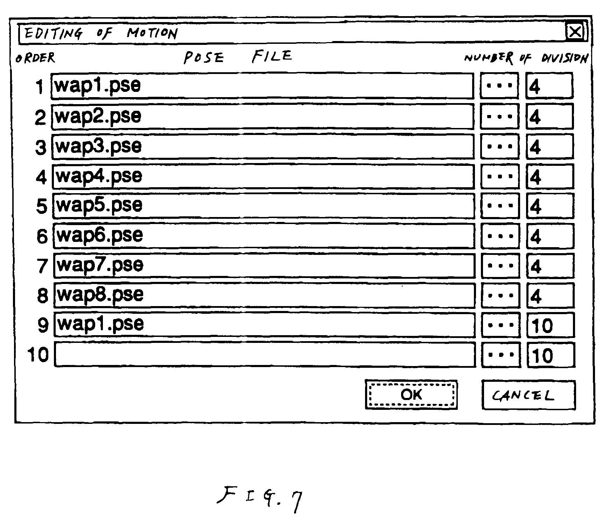

In Fig. 5, the motion data editing section 82 creates a series of motion data of the figure by connecting a plurality of poses in order. Fig. 7 is an example of a display of an interface by the motion data editing section 82. In this interface, the user can indicate the motion data of the human model as key frame animation. For example, a pose file name to store a series of motions and a number of division of interpolation between two poses are input by the user. In Fig. 7, nine poses comprising a dance motion (wap) are arranged in order. A first pose is called wap 1. pse, a second pose is called wap 2. pse, a third pose is called wap 3. pse. In case of actual animation using these poses, an interpolation between two poses is executed by the number of division "4". By pushing a bottom "OK" in the interface, the motion of animation interpolated between two poses is displayed in order for the user to confirm.

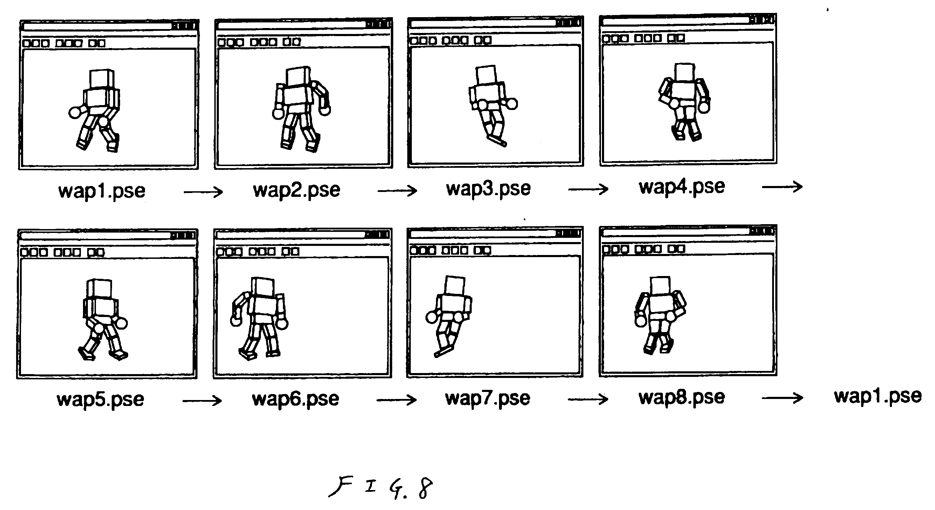

Fig. 8 shows each pose as the wap dance arranged in order. As for each object (hip, arm, leg, ···) of the human model between two poses, data for "dir" (three dimensional vector of the object), "pos" (position of the object) and " up" (shift vector of the object for y axis) are linear-interpolated. The number of division of interpolation is changed through this interface. In case of a large number of divisions, a motion speed of the human model goes up. In case of a small number of division, the motion speed of the human model goes down. This kind of motion data is applicable to any human model based on composition in Fig. 2. In this interface, one pose file name is changed to other pose file name representing different motion of the human model by the user. Furthermore, by reading a motion file explained afterward, the user can edit the motion.

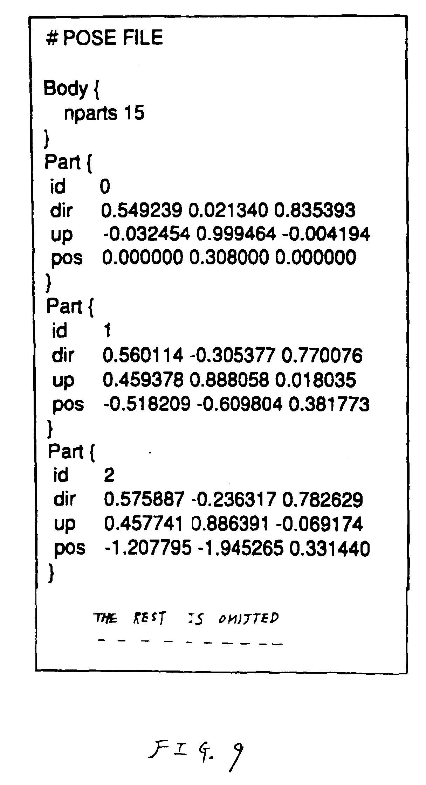

The pose data memory section 7 stores the pose data created by the motion data creation section 8 as a pose file (extension is ".pse"). Fig. 9 shows an example of pose data in the pose file (wap 1. pse). At a first line, a header representing the pose file is described. At a second line, "Body" representing fifteen objects (parts) comprising the human model is described. As for each " Part", an identifier (id) of the object, a three-dimensional vector (dir) of the object, a shift vector (up) of the object for y axis, and a position (pos) of the object are described. In this case, the identifier "0" represents the hip, the identifier "1" represents the left leg 1 and the identifier "2" represents the left leg 2. Each data of "dir" "pos" "up" are obtained when the pose of the object is determined by rotation and movement.

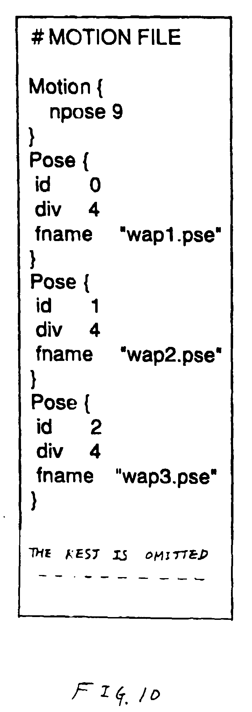

The motion data memory section 6 stores the motion data of the figure created by the motion data creation section 8. The motion data is preserved as a motion file (extension is "mtn"). In the motion file, a plurality of pose file names and the number of divisions indicated by the motion data are described. Fig. 10 shows an example of the motion data in the motion file (wap. mtn). At a first line, a header representing the motion file is described. At a second line, "Motion" represents that this motion consists of nine poses. As for each "Pose", order (id) of the pose, a number (div) of division of interpolation, a pose file name (fname) are described. In this case, a first pose (id is "0") in a series of motions is preserved as the pose file "wap 1. pse". An interpolation between the first pose "wap 1. pse" and a second pose "wap 2. pse" is executed by the number of division "4". As mentioned-above, the motion of the object is generated by a plurality of the pose data and the interpolated data between two pose data.

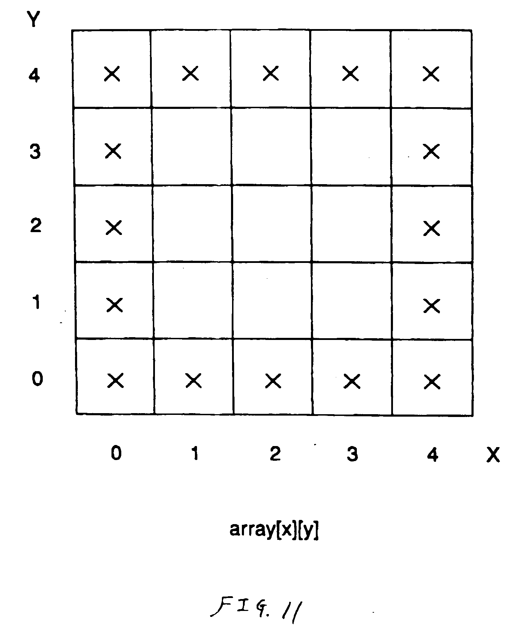

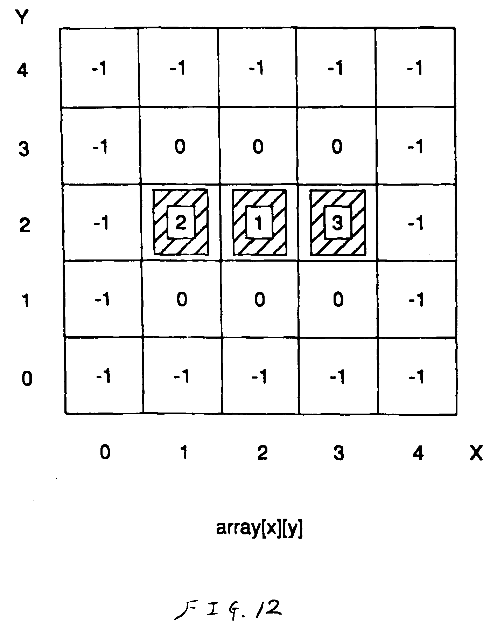

The location data memory section 3 stores location data of a plurality of figures (objects) in virtual space. In the first embodiment, a plurality of objects are located on a two-dimensional lattice. Fig. 11 shows the two-dimensional lattice of "5x5". Actual area locatable the object is "3x3" area of inner side. The outside area is non-locatable area (X). The outside area is used for processing of neighboring points. The location status of the object on the two-dimensional lattice is represented as array [x][y]. This location data is stored in memory space of the computer. Fig. 12 shows each value stored in the two-dimensional array [x][y] in case three objects A, B, C are arranged along a lateral line in which A is located at the center position. The value in the outside area non-locatable the object is "-1". The value in the inside area is "0" if the object is not located therein. The value of the lattice of the object A is "1"; the value of the lattice of the object B is "2"; and the value of the lattice of the object C is "3". In short, array [1][2]-2; array [2][2] =1; and array [3][2]=3. In this case, assume that the object A is moved to array [2][1]. The value of original lattice of the object A is changed to "0", and the value of new lattice of the object A is changed to "1". In short, array [2][2]=0, and array [2][1]=1.

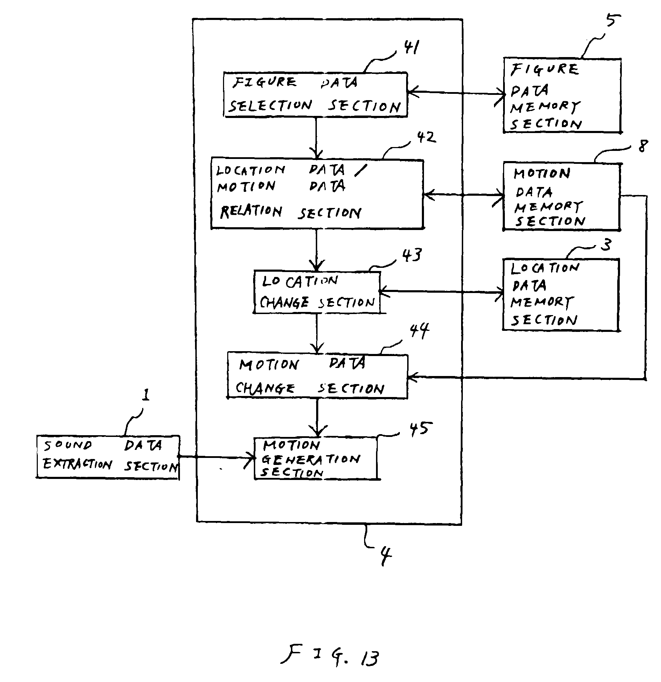

The editing section 4 edits and generates various motion of the plurality of figures (objects) according to an indication from the indication section 11. For example, the editing section 4 selects a plurality of desired figures from the figure data memory section 5, selects a desired motion data from the motion data memory section 6, relates the motion data with the location data of the figure, changes the relation data or the location data, and relates the motion data with tempo data of the sound extracted by the sound data extraction data. Fig. 13 is a block diagram of the editing section 4. In Fig. 13, a figure data selection section 41 selects the figure data to be displayed from the figure data memory section 5. As the figure data, a plurality of human body files of human models each being a dancer are prepared. For example, three human models are selected from these human body files. In Fig. 13, a location data / motion data relation section 42 selects the motion data for the human model's dancing from the motion data memory section 8, and relates the motion data with the location data of the human model. As an example of a relation between the motion data and the location data, local location data and general location data are selectively used.

In case of the local location data, the dance of each human model is classified into one of the following three patterns by a motion data change section 44.

(1) Same dance for all human models
(2) Solo dance for each human model
(3) Solo dance for one human model and interlude dance for other human models

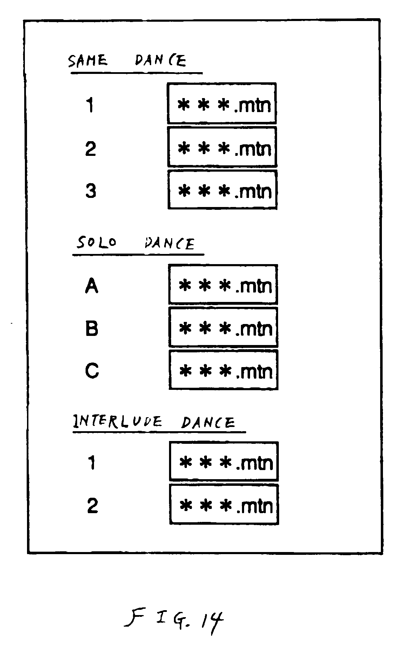

Fig. 14 shows an interface display for a relation between the location data and the motion data in case of the local location data. In Fig. 14, three kinds of same dance for all human models, three kinds of solo dance for each human model (A, B, C), and two kinds of interlude dance for two human models are displayed. The user can indicate his desired kind of dance by inputting the motion file name (***. mtn). The relation data between three dance patterns and the motion file is stored in memory space.

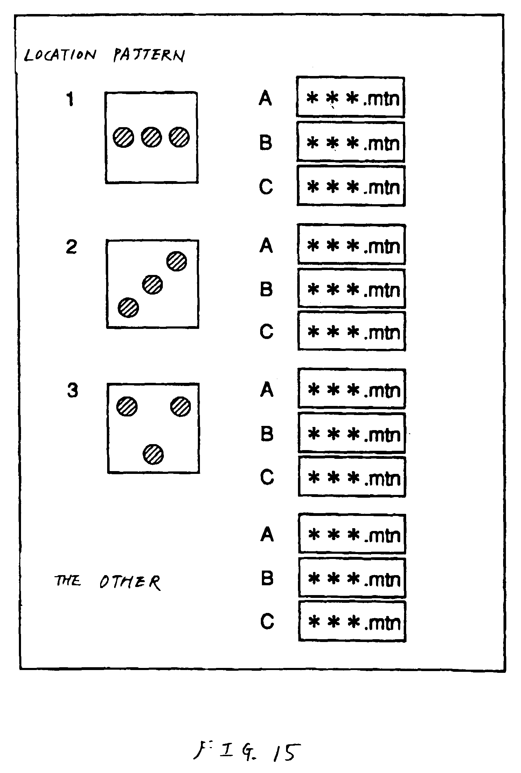

In case of the general location data, a plurality of location patterns of the human model are prepared. The motion data are related with each location pattern. Fig. 15 shows an interface display for a relation between the location data and the motion data in case of the general location data. As for the three location patterns prepared, the user can indicate the kind of dance of each human model A, B, C by inputting the motion file name (***. mtn). As for a location pattern other than the prepared three location patterns, the user can indicate the kind of dance of each human model A, B, C by inputting the motion file name (***. mtn). For example, as for one location pattern, assume that same motion file names are input for each human model A, B, C. If a location pattern of three human models A, B, C is matched with the one location pattern, each human model dances in the same manner. The relation data between the location pattern and the motion file are stored in memory space.

In Fig. 13, the location change section 43 changes the location of the human model in virtual space. In this case, the content of the two dimensional array [x][y] stored in the location data memory section 3 changes. In addition to this, the location data described by the two-dimensional array is mapped to a position coordinate in three-dimensional space to display the human model.

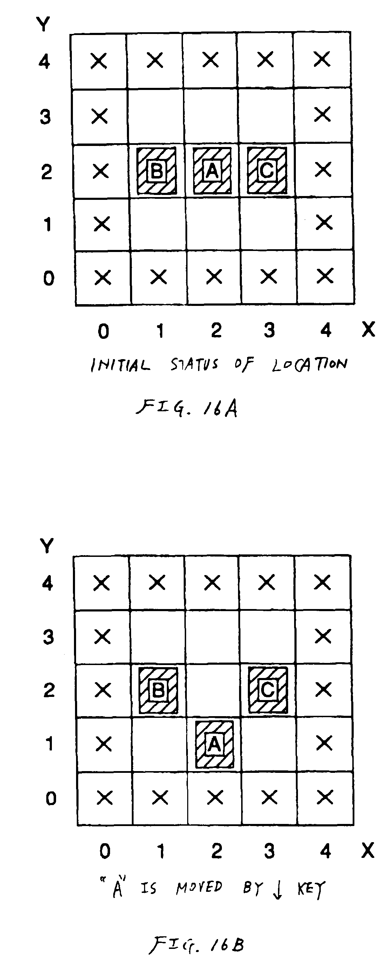

In the first embodiment, the user interactively changes the location of the human model by key input. The user can move one human model on the two-dimensional lattice by an arrow key of a keyboard. Figs. 16A and 16B show an example of moving of the human model A on the two-dimensional lattice by arrow key of the keyboard. In the two-dimensional array [x][y], " →" key corresponds to "+1" along x direction, " ←" corresponds to "-1" along x direction, " ↑" key corresponds to "+1" along y direction, " ↓" key corresponds to "-1" along y direction. As shown in Fig. 16A, assume that the human model A is located at array [2][2] (=1) on two-dimensional lattice. In case of pushing " ↓" key, the location data of the human model A is changed as shown in Fig. 16B (array [2][2]=0, array [2][1]=1). When the human model A is moved by above-mentioned method, the human models B, C are changed. As a result, all location data changes.

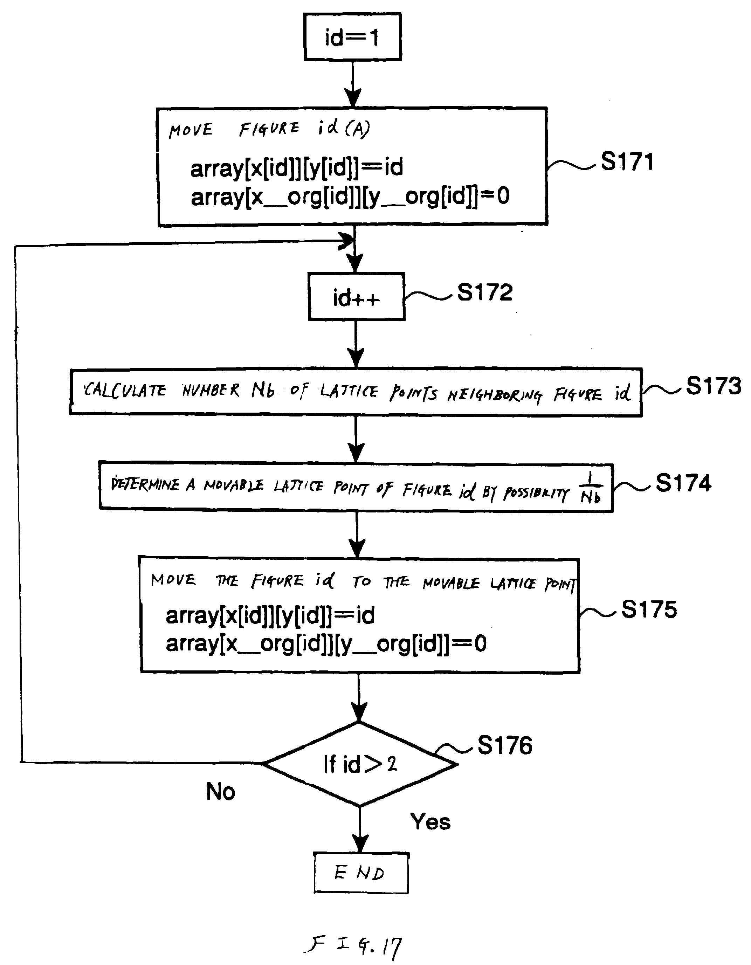

Fig. 17 is a flow chart of moving processing of other human model by probability when one human model is moved by indication of the user. In Fig. 17, a figure "id=1" represents the human model A; a figure "id-2" represents the human model B; and a figure "id=3" represents the human model C. First, the human model A (id=1) is moved, the value of the new location array of the human model is "1" and the value of the previous location array of the human model is "0" (S171). In Fig. 17, x-org [id] and y-org [id] represent original position of each human model on two-dimensional lattice. Next, as for the human model B (id=2)(S172), a number of lattice points movable for the human model B is calculated as neighboring points of original position of the human model B (S173). In this case, the neighboring point represents eight lattice points surrounding the original position. In case of moving the human model by probability, the lattice point on which other human model is already located is a non-movable point. In Fig. 16B, the human model B located at array [1][2] can move one of array [1][1], array [2][2], array [1][3], and array [2][3]. Next, probability of the lattice point movable for the human model B (id=2) is calculated (S174). In this case, the probability is 1/4 because the number of movable lattice points is four. Then, the human model B is moved according to the probability and predetermined random number (S175). As for the human model C (id-3) (S176), the moving control is executed in the same way (S172).

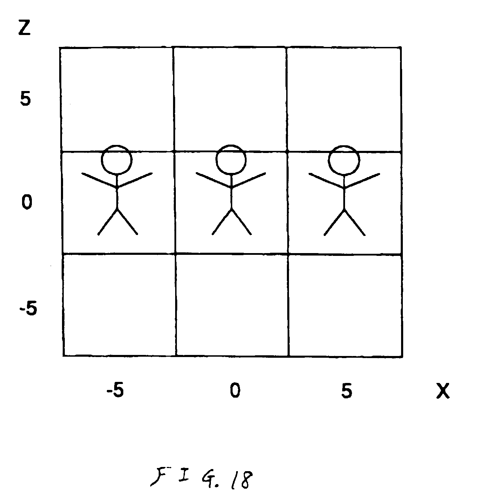

Next, a method for mapping the location data described by two-dimensional array [x][y] to a position coordinate in three-dimensional space to display the human model is described. In the three-dimensional space, XZ plane is regarded as the ground shown in Fig. 18. In this case, a direction of height of the human model is parallel to y axis. The mapping from two-dimensional array (x, y) to actual display space (X, Y, Z) is calculated by following equation using movement and scale conversion.

$$X=(x-2)*5$$

$$Y=0$$

$$Z=(y-2)*5$$

The location change of the human model is not limited to key input of the user. For example, timing of the location change is periodically obtained using time data in the MIDI signal. Otherwise, as for some channel data, the location change is executed by change of musical interval or intensity of the channel data as a key. In short, timing of the location change is automatically obtained from sound data.

In Fig. 13, when the location change section 43 changes the location of the human model in virtual space, a motion data change section 44 evaluates the changed location data and changes the motion data assigned to the human model according to the motion data related by the location data / motion data relation section 42. As an evaluation method of location of the human model, both the local location data and the general location data are explained as examples.

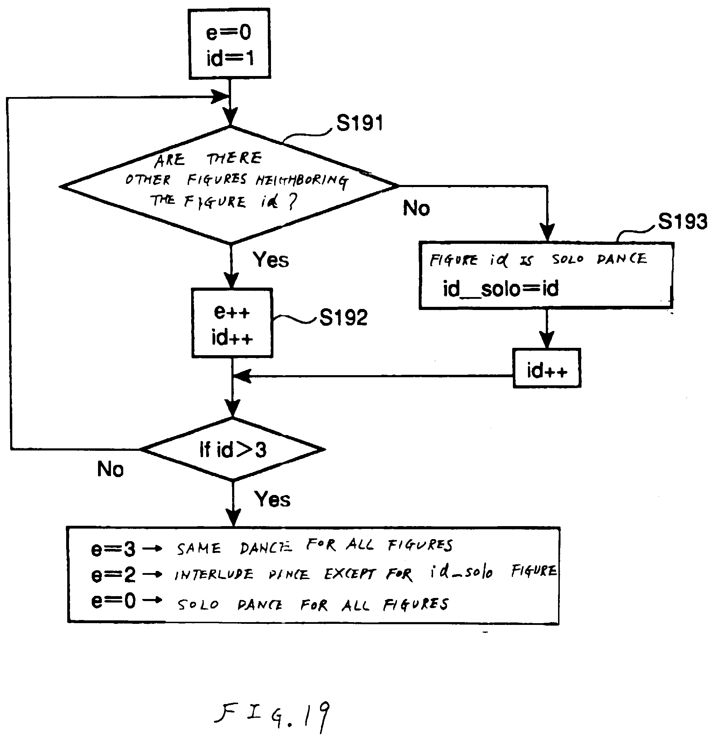

Fig. 19 is a flow chart of evaluation processing by the local location data. In this method, it is decided that other human models are located neighboring a lattice point on which one human model is located on the two-dimensional lattice. First, it is decided that other figures (character model) are located at neighboring lattice points of each character model (S191). If the other figures are located at neighboring lattice points, the value of parameter e is incremented by 1 (S192). If the other figures are not located, a parameter "id-solo" is assigned to the character model as an isolated model (S193). As a result, motion of each character model is determined by the value of parameter e (S194).

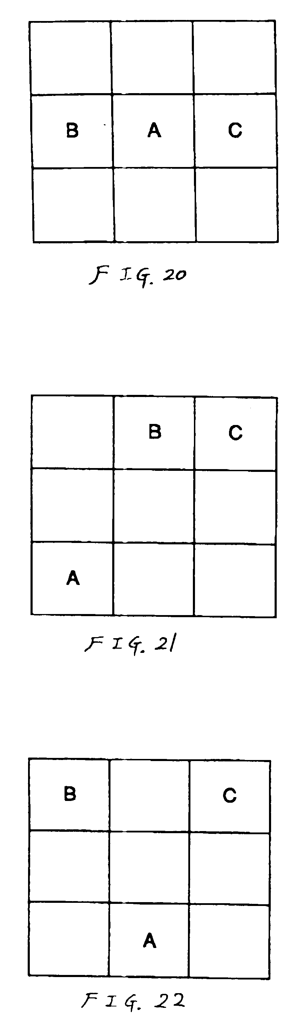

As shown in Fig. 20, in a situation that three human models A, B, C are adjacent each other, the value of parameter e is "3". Therefore, same motion (dance) is assigned to three human models in order to keep a predetermined space form. In this case, cooperation in synchronization with same dance is represented. The kind of same dance is determined as one of three solo dances indicated by the location data / motion data relation section 42 in Fig. 14.

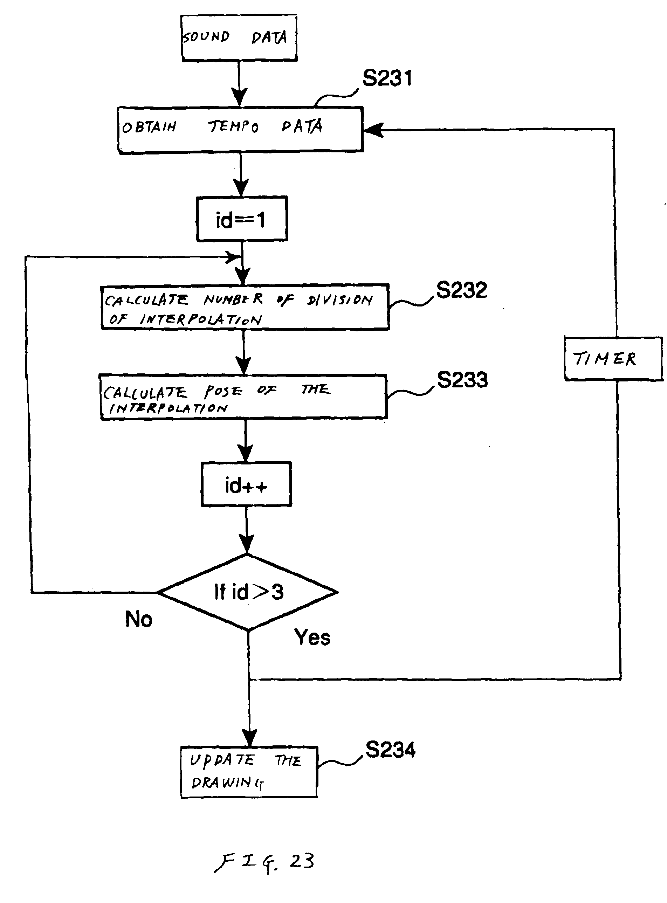

Fig. 21 shows a situation that one human model A is isolated and other two human models are adjacent each other. In this case, solo motion (dance) is assigned to the one human model A. The value of parameter e is "2". Therefore, interlude dance during the solo dance is assigned to the two human models B, C in order to represent cooperative dance by space gap. The kind of the solo dance is determined as the motion file assigned to the human model A indicated by the location data / motion data relation section 42 in Fig. 14. The kind of the interlude dance is determined as one of two motion files indicated by the location data / motion data relation section 42 in Fig. 14.

As shown in Fig. 22, in a situation that three human models A, B, C are respectively isolated, the value of parameter e is "0". Therefore, solo dance is assigned to each model A, B, C in order to accent the cooperation of dance. The kind of solo dance is determined as the motion file assigned to each human model A, B, C indicated by the location data / motion data relation section 42 in Fig. 14.

On the other hand, as an evaluation method of general location data, a matching between the location pattern prepared in Fig. 15 and the two-dimensional array [x][y] as changed location is executed. First, the location of the human model is searched in xy space of the two-dimensional array [x][y]. If the searched location of the human model matches one of the location patterns in Fig. 15, the motion file related with the one location pattern is assigned to each human model A, B, C.

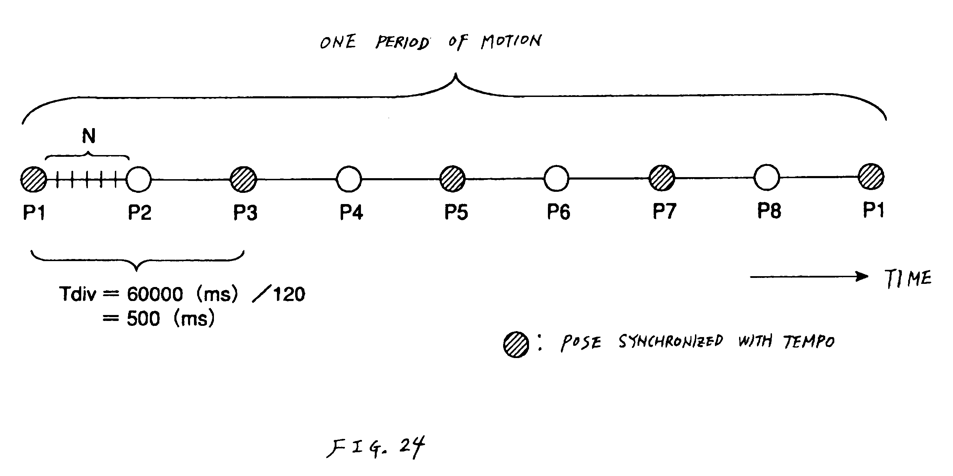

In Fig. 13, a motion generation section 45 obtains tempo data from the sound parameter extracted by sound data extraction section 1 and moves the figure (character model) according to the tempo data with the motion data assigned to the figure. Fig. 23 is a flow chart of processing of the motion generation section 45. As mentioned-above, in the first embodiment, motion of the human model is generated by a method of key frame animation. First, the tempo data is obtained from the sound parameter (S231). In order to synchronize the motion of the human with the tempo data, the number of divisions of interpolation between two poses of the motion is calculated using the tempo data (S232). By using the number of divisions of interpolation, interpolated poses between two poses of the motion are calculated in order (S233). By drawing the pose and the interpolated motion in order, the motion of the human model is represented as animation (S234). This processing is repeated at an interval by generation of timer event, such as a timer of "40 ms" interval. Hereinafter, a method to calculate the number of division of interpolation is explained. For example, the tempo data obtained from MIDI signal is "120" representing 120 times of tempo per one minute. Accordingly, time interval of one tempo is "6000 (ms) / 120 = 500(ms)". In the first embodiment, the time interval between poses described in the motion file is prescribed by a time interval of one tempo in order to synchronize the motion with the tempo. Fig. 24 shows an example of a time chart representing a series of poses described in the motion file in case of tempo "120". As shown in Fig. 24, one period of the motion starts at pose P1, ends at pose P8, and returns to pose P1. The one period is totally represented as eight pose sections. In this case, a time interval (500 ms) of one tempo is determined as an interval of two pose sections P1-P3, P3-P5, P5-P7, P7-P1. A number N of division of interpolation of one pose section (for example, P1-P2) is calculated by using "tempo" and the interval (40 ms) of timer as follows.

$$N=((60000 / tempo) / 2) / 40=6$$

In this way, the human model is moved in synchronization with the tempo. Therefore, each human model dances uniformly, and cooperation synchronized with time is represented.

Next, a first modification of the editing section 4 is explained. In the first modification, in addition to the above-mentioned editing function of the editing section 4, channel (musical instrument) data of MIDI signal input from the sound data extraction section 1 is related with the character model, and the relation data is changed. At a timing to play the related channel, new motion related with the character model is derived at an interval of two poses synchronized with the tempo. In short, various kinds of motion of the character model are edited / generated.

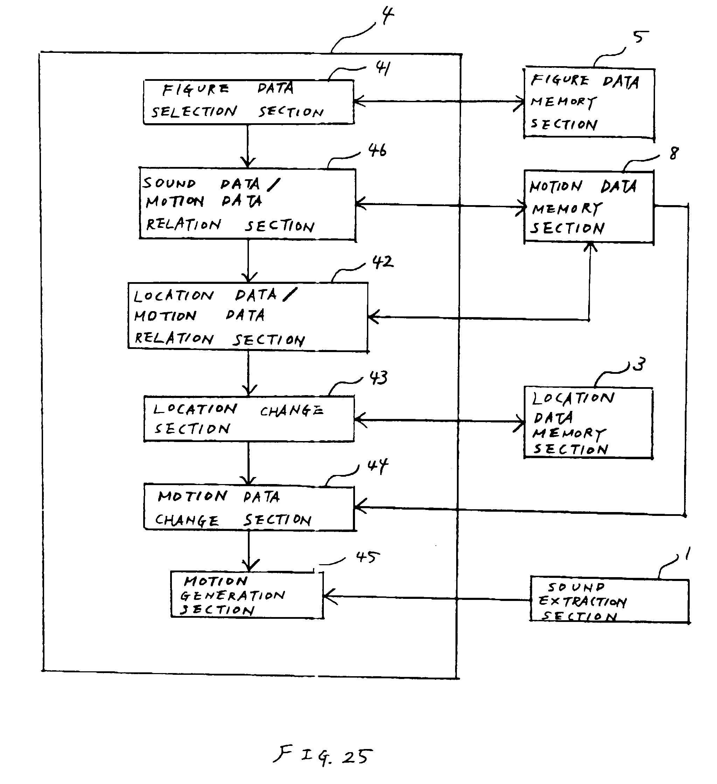

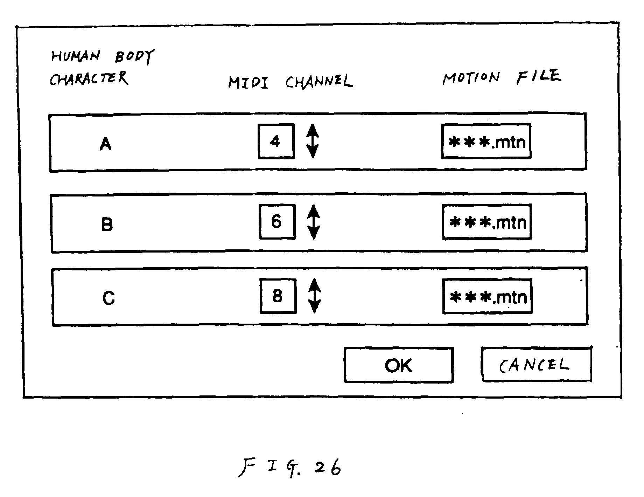

Fig. 25 is a block diagram of the editing section 4 according to the first modification. In Fig. 25, the figure data selection section 41, the location data / motion data relation section 42, the location change section 43, the motion data change section 44 are same as each section in Fig. 13. A sound data / motion data relation section 46 relates the channel data and the motion data with the character model. Fig. 26 is an interface display of the sound data / motion data relation section 46. As for the human body character (figure), MIDI channel (number) and motion file name (***. mtn) are input by the user, and related with the human body character. This relation data is stored in memory space. MIDI channel number "1~16" respectively corresponds to a musical instrument used for a tune. Each channel is sounded at a peculiar (different) time during playback. In this interface, if a different channel is assigned to each human model, each human model respectively moves as an ad-lib at a different timing in an interval of the pose synchronized with the tempo. In short, each human model executes its special motion at its peculiar timing. If the same channel is assigned to each human model, each human model moves as the ad-lib at the same timing in an interval of the pose synchronized with the tempo. In the first modification, cooperation of synchronization or time lag of the motion is represented in case of ad-lib dance or motion of the human model.

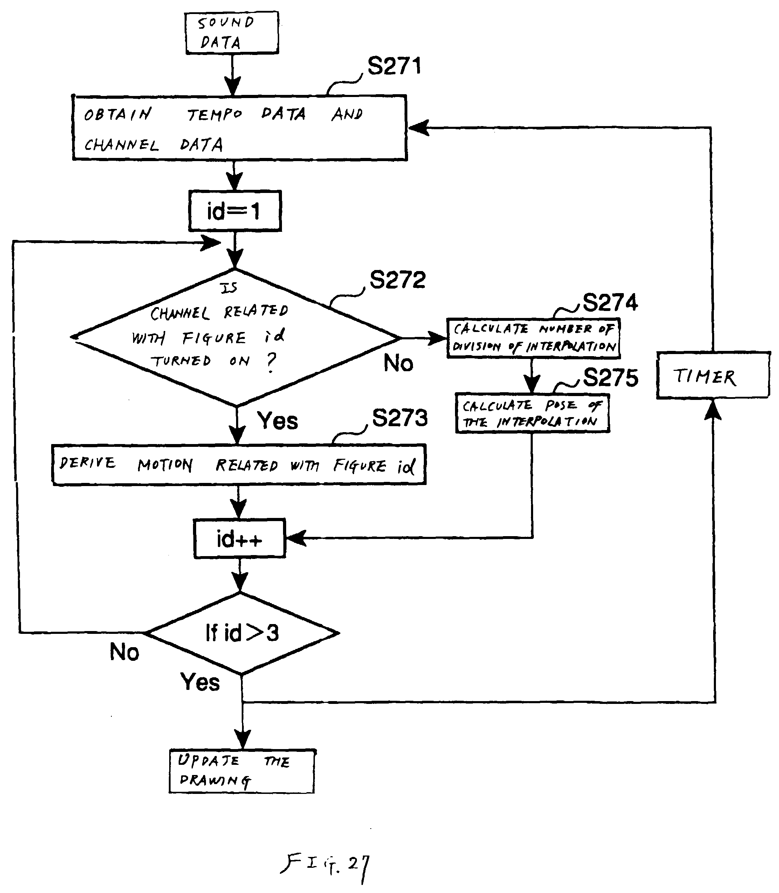

Fig. 27 is a flow chart of processing of the motion generation section in the first modification. First, in addition to the tempo data obtained from the sound data, channel data (note-on) indicating a channel number to play is obtained (S271). If the channel related with the human model (A, B, C is represented as "id") is turned on (for example, a channel number "4" related with the human model A is turned on ) (S272), new motion is derived from the pose data synchronized with the tempo (S273). The new motion is derived from a motion file related to the human model A by the sound data / motion data relation section. If the channel related with the human model is turned off, a number of division of interpolation is calculated in the same way as in Fig. 23 (S274), and interpolated poses are generated (S275).

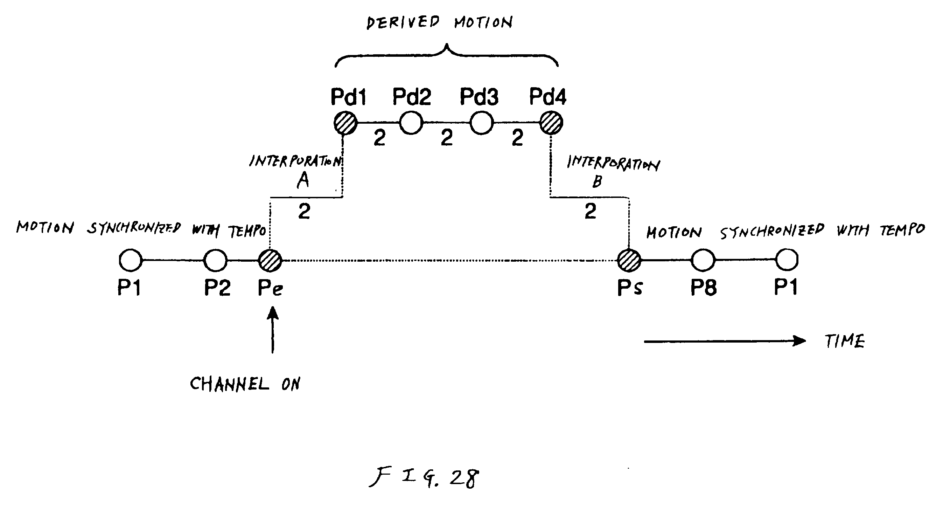

Fig. 28 shows an example of a time chart representing new motion derived in a pose interval synchronized with tempo. In Fig. 28, the derived motion consists of four poses (Pd1, Pd2, Pd3, Pd4). At a timing of the channel's turning on, a section between the last pose Pe synchronized with tempo and a start pose Pd1 of derived motion is interpolated by a number of division "2" (interpolation A). Next, each pose section (Pd1-Pd2, Pd2-Pd3, Pd3-Pd4) is interpolated by the number of division "2". A section between the last pose Pd4 of derived motion and a start pose Ps synchronized with tempo is interpolated by the number of division "2" (interpolation B). In this case, the start pose Ps is a pose interpolated for ten times (the number of division "2" x "5" times) from the last pose Pe. As shown in the interpolations A and B of Fig. 28, at the start pose Pdl and the end pose Pd4 of derived motion, animation interpolated for the pose synchronized with tempo is generated. Therefore, the motion of the human model is smoothly displayed in a connected section between original motion and the derived motion. Furthermore, the start pose Ps is determined by interpolating the total number of divisions of the derived motion from the last pose Pe. Therefore, at an interval between the last pose Pe and the start pose Ps, the original motion synchronized with tempo is continuously kept without deviation between the tempo and the pose. In short, even if the derived motion of one human model is generated, this derived motion of the one human model and the motion of other human models are always synchronized with the tempo.

Next, a second modification of the editing section 4 is explained. In the second modification, in addition to the editing function of the first modification, when the user (creator) interactively changes the motion data of one figure (one character model), the motion data of other figures (other character models) changes in proportion to the change of the motion data of the one figure. In short, the motion data of a plurality of figures are totally edited / generated.

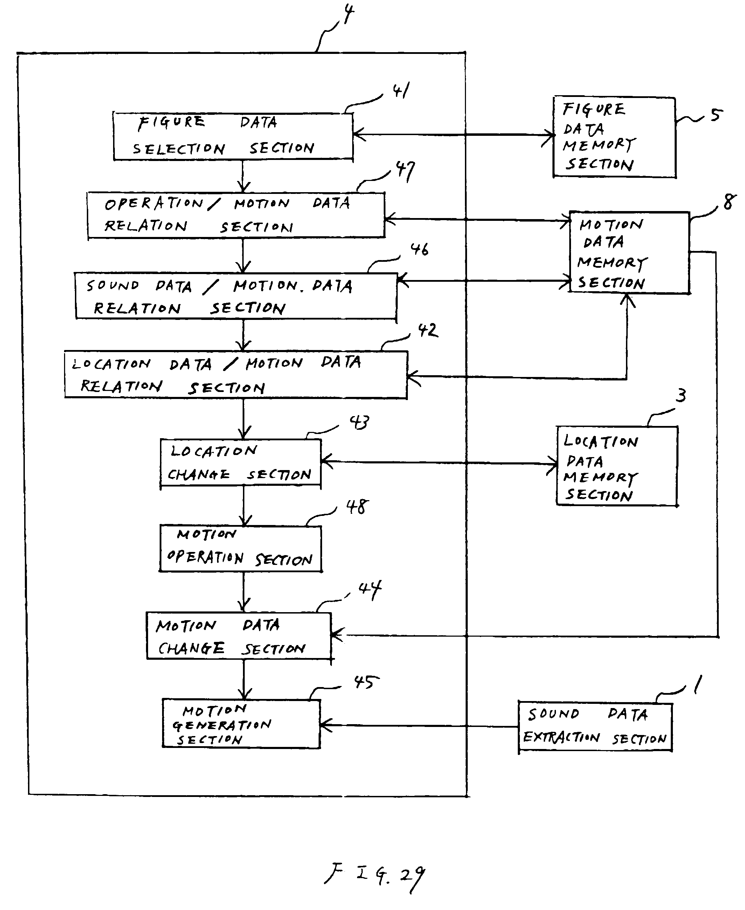

Fig. 29 is a block diagram of the editing section 4 according to the second modification. In Fig. 29, the figure data selection section 41, the location data / motion data relation section 42, the location change section 43, the sound data / motion data relation section 46 are same as each section in Fig. 25. An operation / motion data relation section 47 relates the interactive operation of the user with the motion data of the character model. In the second modification, key input from the keyboard is used as interactive operation means of the user.

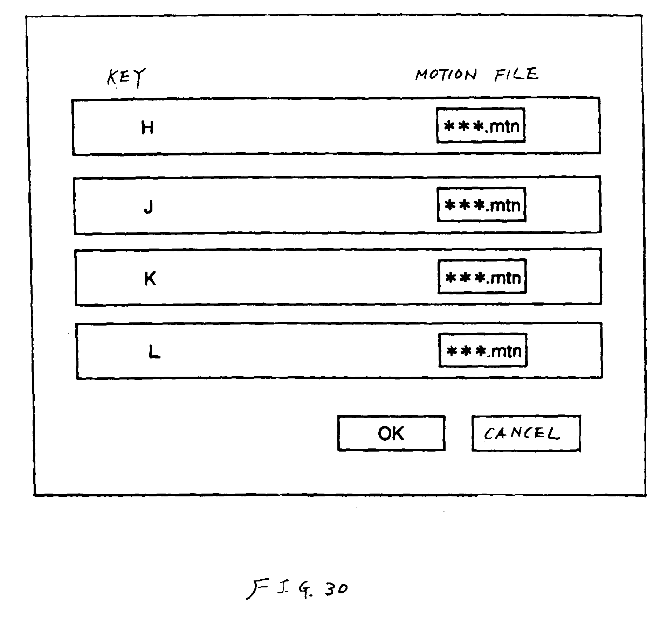

Fig. 30 is an interface display to relate keys of the keyboard with the motion data. In Fig. 30, using four keys H, J, K, L, the motion file (***. mtn) is input to relate the motion data with the key. A motion operation section 48 interactively changes the motion data of the human model by the user. In Fig. 30, the user can operate four keys H, J, K, L related by the operation / motion data relation section 47. In this case, the operation / motion data relation section 47 may relate an image of movement or gesture of actual person with the motion data of the human model. In case of image recognition (for example, template-matching) through CCD camera, interactive operation by the movement or gesture of the person is possible.

The motion data change section 44 assigns the motion data operation by the motion operation section 48 with one human model. After determining the relative location between the one human model and other human models, the motion data of the other human models are changed.

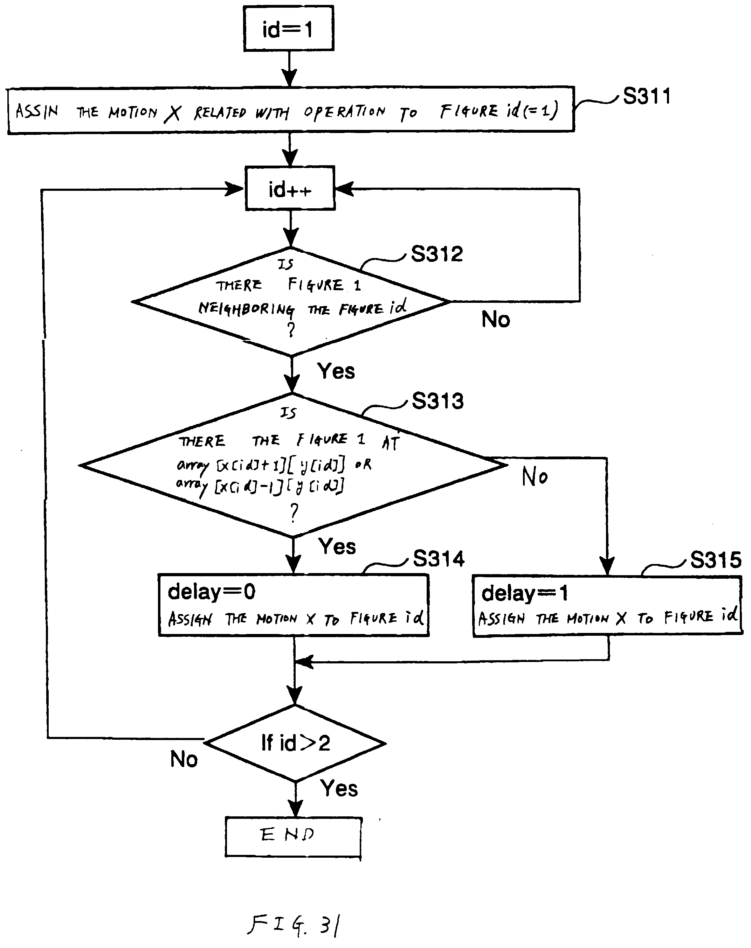

Fig. 31 is a flow chart of processing of the motion data change section 44 in case of input operation from the motion operation section 48. First, motion file X related with input key is assigned to the human model A (id=1) (S311). Next, it is decided that the human model A is located neighboring a human model B (id=2) on the two-dimensional lattice (S312, S313). If the human model A is located along a lateral direction (X direction) of the human model B, the motion X is assigned to the human model B as "delay-0", which is executed at the same timing as the motion of the human model A (S314). In other cases, the motion X is assigned to the human model B as "delay-1", which is executed at delay timing from the motion of the human model A (S315). Hereinafter, as for a human model C (id-3), the motion is assigned after determining the relative location between the human model A and the human model C in same way.

As mentioned-above, in the second modification, the human models B, C execute the motion X at the same timing or delay timing for the motion X of the human model A according to the location status. Therefore, cooperation by synchronization or delay in organized dance is represented.

The motion generation section 45 generates motion of each human model at the timing (same or delay) assigned by the motion data change section 44 in the same way as in the first modification. In Fig. 28, a timing of channel on is replaced by a timing of key input of the user. As for the motion of the human model (delay=0), the motion generation section 45 generates the motion at the timing of key input. As for the motion of the human model (delay=1), the motion generation section 45 generates the motion at a delay timing of several frames from the key input.

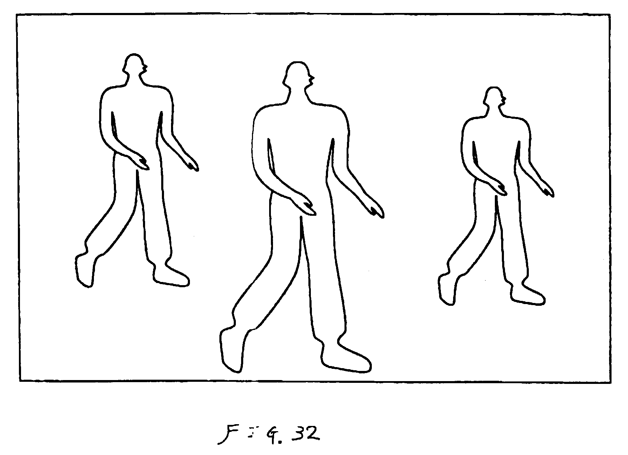

In Fig. 1, the drawing section 9 executes drawing according to the figure data and the motion data related with the location data and sound data by editing section 4. The sound output section 2 extracts the second data such as tune play data from MIDI signal and plays the sound data. The display section 10 converts the content drawn or updated by the drawing section 9 to video signal and displays the drawn content as animation. Fig. 32 shows one scene of displayed animation.

As mentioned-above, in the first embodiment, a relation among the sound, the figure, and the motion is interactively edited while confirming the sound and the video. Therefore, various videos are created for one piece of music.

Furthermore, the motion of each figure (character model) is controlled according to space location of a plurality of figures. Therefore, a plurality of human models change their forming in space and time to the music, and each human model acts by changing the motion according to the forming. In short, space-cooperation in organized dance is represented as animation.

Furthermore, timing of the motion related with a plurality of figures is synchronized or shifted. Therefore, a plurality of human models move at the same timing or propagate the motion at a delay timing in order. In short, time-cooperation in organized dance is represented as animation.

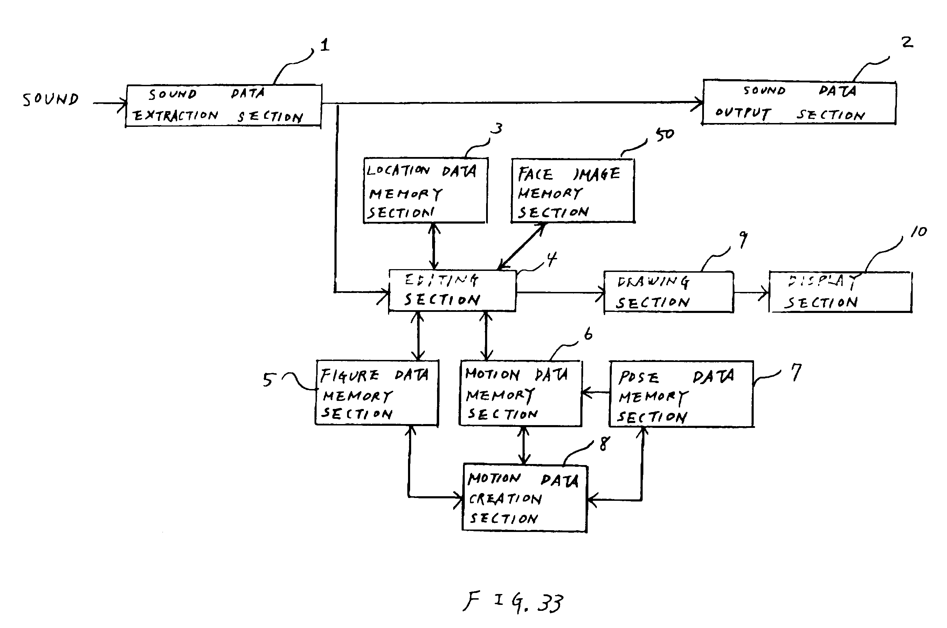

Next, a second embodiment of the present invention is explained. Fig. 33 is a block diagram of the animation creation apparatus according to the second embodiment. In Fig. 33, the animation creation apparatus includes the sound data extraction section 1, the sound data output section 2, the location data memory section 2, the editing section 4, the figure data memory section 5, the motion data memory section 6, the pose data memory section 7, the motion data creation section 8, the drawing section 9, the display section 10, and a face image memory section 50. Each section except for the editing section 4 and the face image memory section 50 is same as the first embodiment in Fig. 1.

The face image memory section 50 stores a face image and a back image of a head to synthesize on the head part of human model. From a person's face image input by a digital camera, scanned by a scanner, or drawn by a paint tool, the face image is obtained by eliminating a background image. As the face image without the background image, for example, a user paints over the background area except for the face area (including hair part) as white color (R:255, G:255, B:255) by a paint-tool. In this way, the face image without the background area is obtained. From a person's back image of the head input by the digital camera, scanned by the scanner, or drawn by the paint tool, the back image of the head is obtained by eliminating the background image. The back image of the head may be obtained by drawing a face area of the face image in the color of hair.

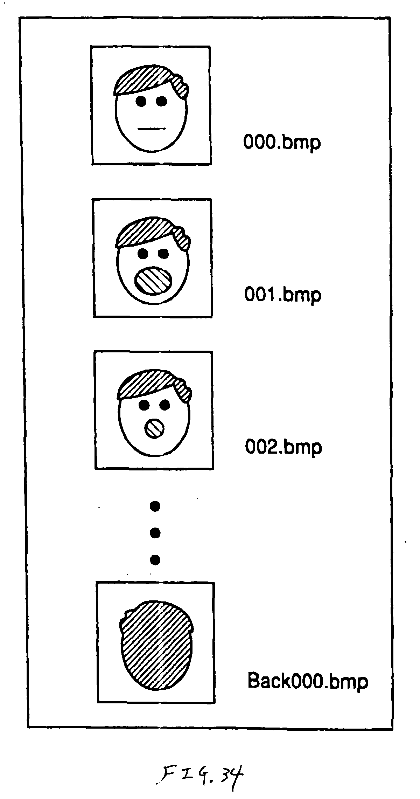

As shown in Fig. 34, the face image memory section 50 stores a series of face images (000. bmp, 001. bmp, ⋯) with the back image of the head (Back 000. bmp) as one set. Each of the face images and the back image of the head is a static image file such as bitmap format (BMP). As the series of face images, ten frames each of which facial expression is different are used.

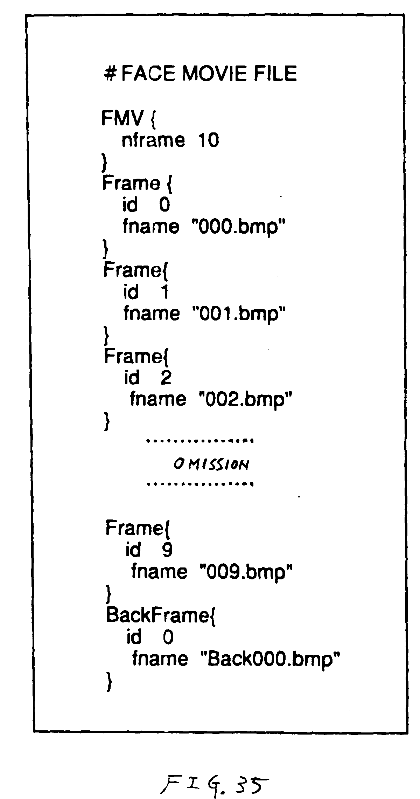

Fig. 35 is an example of a file to store the face image and the back image of the head as one set. In short, the series of the face images and the back image of the head are described in this file. A description "FMV [nframe 10]" represents that the series of the face images consists of ten frames. A description "Frame[id 0 fname " 000. bmp"]" indicates 1st face image file. Following description of "Frame" indicates the series of face image file. The last description "BackFrame [id 0 fname " Back000. bmp"]" indicates the back image file of the head. In the second embodiment, above-mentioned file is called FMV file by using an extension ". fmv".

The editing section 4 edits / generates various motion of display content and CG character. For example, the editing section 4 selects a desired FMV file from the face image memory section 50, puts or renders the face image on a head part of CG character, changes CG character, and changes a relation between the sound data and the motion data.

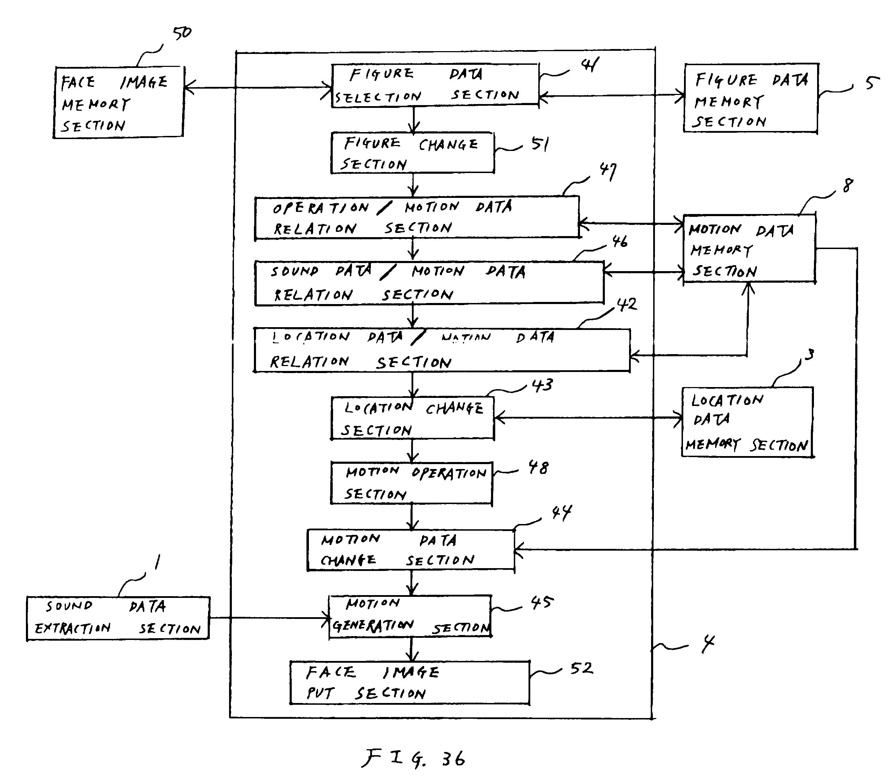

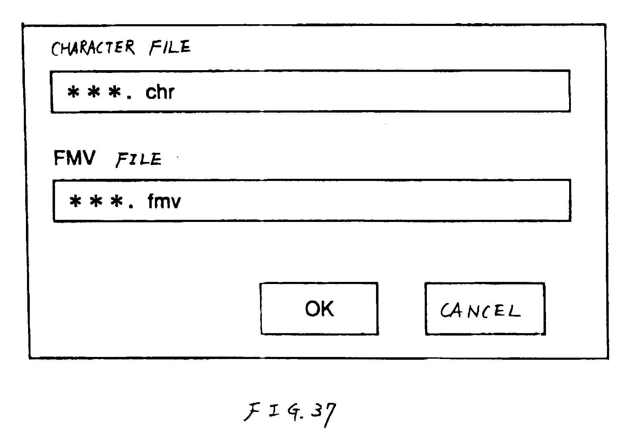

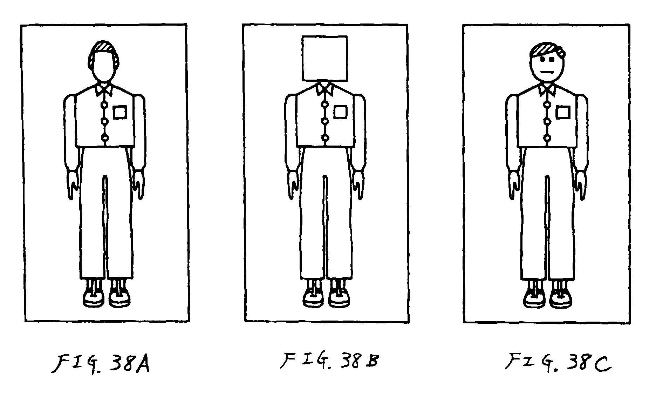

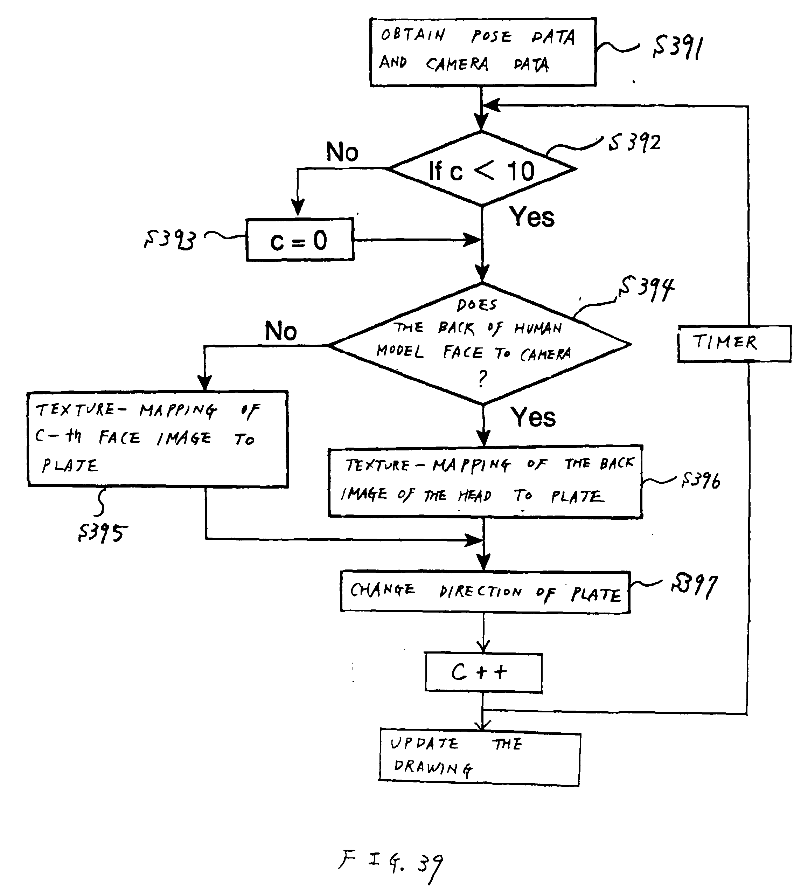

Fig. 36 is a block diagram of the editing section 4 of the second embodiment. In Fig. 36, each section except for the figure data selection 41, a figure change section 51, and a face image put section 52 is the same as in the first embodiment in Fig. 29. The figure data selection section 41 selects a kind of CG character and FMV file of the face image to put on head part of the CG character. As for selection of CG character and FMV file, a dialog box for selecting character shown in Fig. 37 is used. This dialog box is activated by pointing a mouse-cursor on CG character and clicking. In order to select CG character, the user describes a file name of desired CG character in a column of character file in Fig. 37. In order to select FMV file, the user describes a FMV file name in the FMV file column in Fig. 37.

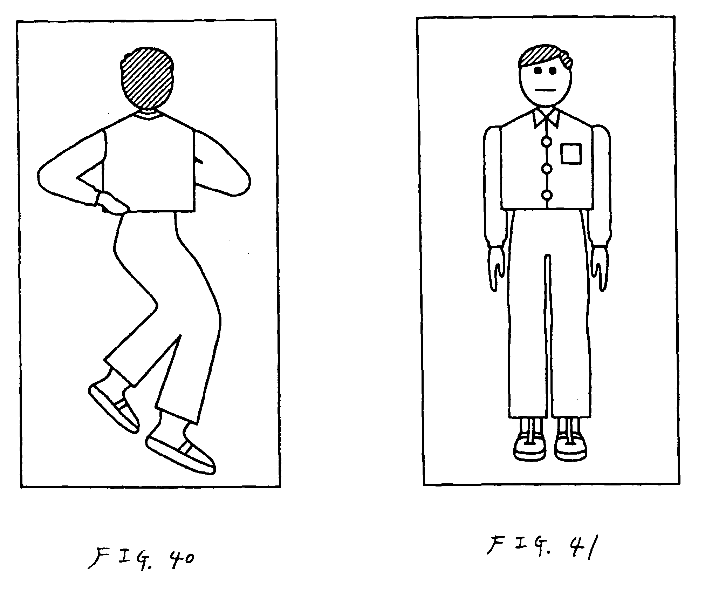

In Fig. 36, the figure change section 51 replaces the indicated CG character by FMV file or CG character selected by the figure data selection section 41. Figs. 38A, B, C show one example of CG character to put on the face image. Fig. 38A shows CG character indicated by the user. First, as shown in Fig. 38B, a head part of CG character is replaced by a plane plate. Next, as shown in Fig. 38C, a first image of FMV file is put on the plane plate by texture-mapping. In this case, a background part drawn by white color of face image is transparentized. As for this transparence, for example, texture function of Direct 3D as API of three-dimensional CG is used while transparency of white part is effective. In this way, the face image including the face area and a transparent background is mapped to the head part of CG character.

In Fig. 36, as for the plane plate of the head part of CG character replaced by the figure change section 51, the face image put section 52 periodically puts the face image and the back image of the head of FMV file by changing each image.

Fig. 39 is a flow chart of processing of the face image put section 52. First, pose data of CG character generated by the motion generation section 45 and camera data representing position / direction to view the three-dimensional scene (front position / direction of the display) are obtained (S391). A method for putting the face image and the back image of the head is determined by the pose data and the camera data. The pose data represents position / direction of each part (head, chest, etc) of CG character. As a basic processing, ten frames of the face images is periodically changed and put on the plane plate by a timer of "100 ms" interval. After the tenth face image is put (S392), the first face image is put next as repeat processing (S393).

Next, it is determined whether the back of the human model of the CG character faces the camera position (user's view position). An inner product between a vector Va along a direction of chest of the human model and a vector Vb linked from a chest position to the front position of the display is calculated. If "Va·Vb > =0", the human model is decided to face to the front position. If "Va·Vb < 0", the back of the human model is decided to face to the front position. If the human model faces to the front position of the display, C-th face image is put on the plane plate of the head part of the human model (S395). If the back of the human model faces to the front position of the display, the back image of the head is put on the plane plate of the head part of the human model (S396). A direction of the plane plate of the head part is changed according to a direction of the human model for the front position of the display (S397). In order to always turn the face image to the front position of the display, a direction of the plane plate of the head part is corrected as a vector linked from the head position of the human model to the front position of the display.

Fig. 40 shows one example of the human model on which the back image of the head is put. By above-mentioned processing, the face image of different expression is periodically changed in synchronization with pose of motion of the character model. Furthermore, the face image is changed to the back image of the head according to a direction of the character model.

In the second embodiment, the figure data selection section 41 relates one FMV file with one CG character. However, as modification, a plurality of FMV files may be related and changed in order according to key operation of the user or the sound data. In this case, for example, an FMV file including a laugh expression and an FMV file including a surprise expression are prepared and selectively changed at a timing of sound generation. In this way, the face expression of the human model is dynamically changed from the laugh expression to the surprise expression.

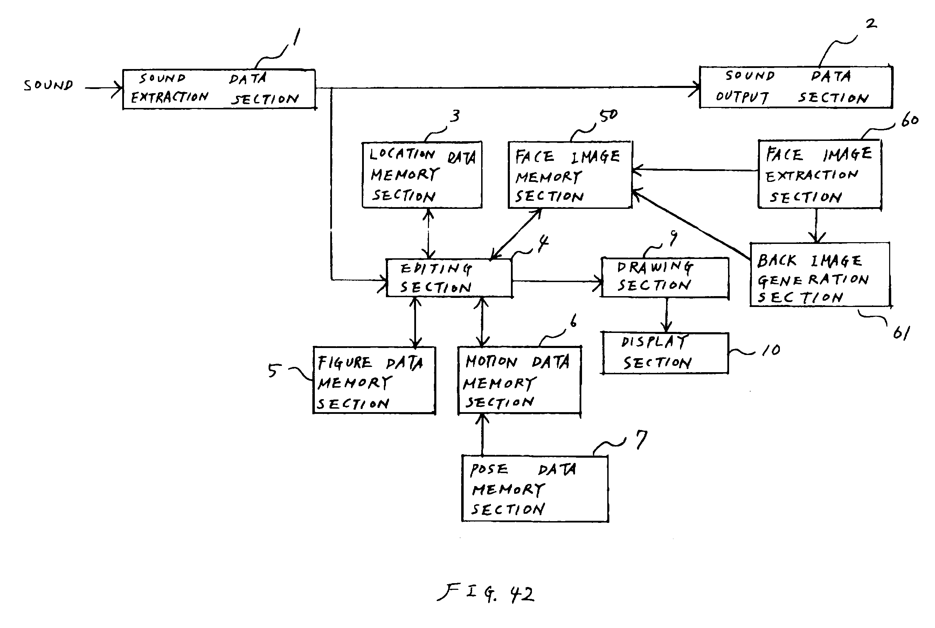

Furthermore, in the second embodiment, the face image is put on the head part of the human model. However, a dress part image is extracted from the upper half of the body of the person's image. In this case, the background area is painted by white color. Then, the extracted image is put on a chest part of the human model as shown in Fig. 41. In the same way as the back image of the head, the dress part of the extracted image is painted by color of the dress and used as the back image. When the human model turns tail to the camera position, the back image is put on the chest part.

Next, a third embodiment of the present invention is explained. Fig. 42 is a block diagram of the animation creation apparatus according to the third embodiment. As shown in Fig. 42, the animation creation apparatus includes the sound data extraction section 1, the sound data output section 2, the location data memory section 3, the editing section 4, the figure data memory section 5, the motion data memory section 6, the pose data memory section 7, the drawing section 9, the display section 10, the face image memory section 50, a face image extraction section 60, a back image generation section 61.

In the third embodiment, the face image extraction section 60 and the back image generation section 61 automatically generates the face image and the back image of the head. These images are selectively put on the head plate of the human model moving in synchronization with the music. In Fig. 42, each section except for the face image extraction section 60 and the back image generation section 61 is same as in the second embodiment in Fig. 33.

The face image extraction section 60 automatically extracts a face part from a person's image. As a method for automatically extracting the face part from dynamic image, for example, a fractal extraction method is used. In the fractal extraction method, the face image (including hair part) from which the background area is eliminated is extracted at a processing speed of ten frames per second. In short, a series of face images as ten frames is extracted for one second. Each face image is stored as one static image file (BMP) while the eliminated background part is changed as white color area (R:255, G:255, B:255). The back image generation section 61 automatically generates the back image of the head of a person based on one face image extracted by the face image extraction section 60. For example, in the first frame in ten frames, the face area is painted the color of hair. In this case, the darkest color in the face image is used as the color of hair. Furthermore, it often happens that a boundary of the back of the head is irregular because of protrusions such as an ear. Therefore, a processing of smoothing is executed for the boundary. The nape or low part (several bits part) of the back of the head area is painted white in order to cut along a horizontal direction. The back image of the head is preserved as a static image file (BMP) in the same way as the face image. These face images and the back image of the head as ten frames are stored as one file in the face image memory section 50. As mentioned-above, the file name is described in FMV file.

As mentioned-above, the third embodiment is applied to the human model's dancing in virtual space. However, the third embodiment is also applied to a chat or a virtual mall of which a plurality of users owns jointly from a remote place. For example, the human model (three-dimensional character) as a representative of each user converses or walks in virtual space. In this case, the face image or the back image of the head is synthesized with the head part of the human model as if the user himself converses or walks in the virtual space. The face image may be moved in synchronization with text conversation or walking in order to represent different motion for each user.

Furthermore, in case of music-distribution, a character model including singer's face image with music data is supplied to a virtual system. If the user adds his face image to this virtual system, he can easily create a situation that the human model himself dances with the singer. Alternatively, face images of audience in a hall or in a remote place are extracted from input images during a live concert. On a background display of a stage in the hall, the human models, including the face images, virtually dance in synchronization with the singer's music. In this way, a new performance is realized.

As mentioned-above, in the third embodiment, a plurality of object images and the back image of the object image are selectively synthesized with the character model at a predetermined interval or by a direction of the character model. In this case, a concert-hall presence that the user is dancing with the character model is easily generated. Concretely speaking, a plurality of face images and the back image of the head are selectively put on the head part of the human model. Therefore, animation whose face expression changes in cooperation with the motion is easily created. Especially, a rotation motion of the human model such as a ballerina, that the face always turns to the front and the back of the head turns to the front at one moment only, is easily created. Therefore, the user can feel a concert-hall presence.

Furthermore, in the third embodiment, the face image and the back image of the head are automatically generated from a dynamic image such as video. Therefore, the user's load to create the face image and the back image of the head is omitted and animation-motion including change of face expression is easily realized.

Furthermore, the upper half of the body is extracted and put on the human model in addition to the face image. In this case, the virtual space including more concert-hall presence is easily realized.

A memory can be used to store instructions for performing the process described above. The process may be performed with the aid of a general purpose computer or microprocessor. Such a memory can thus be a CD-ROM, floppy disk, hard disk, magnetic tape, semiconductor memory, and so on.

Furthermore, according to indication of program installed from the memory to the computer, OS (operation system) on the computer, database management software and MW (middle ware) such as network may execute a part of each processing to realize the present invention.

Furthermore, the memory of the present invention is not limited to a medium independent from the computer. The memory includes a medium to store a downloaded program transformed by LAN or Internet.

Furthermore, the memory medium is not limited to one unit. In case the processing of the present invention is executed by programs stored in a plurality of memory mediums, the plurality of memory mediums are included in the present invention.

In the present invention, the computer executes each processing of the present embodiment according to the program stored in the memory medium. This computer may be one apparatus such as a personal computer, or a system of which a plurality of the apparatuses are connected by a network.

Furthermore, in the present invention, the computer is not limited to a personal computer. The computer may be a microcomputer or a processor included in an information processing apparatus. In short, the processor and the apparatus executable the function of the present invention by a program are generically called the computer.

Other embodiments of the invention will be apparent to those skilled in the art from consideration of the specification and practice of the invention disclosed herein. It is intended that the specification and examples be considered as exemplary only, with the true scope and spirit of the invention being indicated by the following claims.

**Claims**

1. Animation creation apparatus, comprising:

   sound data extraction means for extracting a predetermined parameter from sound data;
   figure memory means for storing a plurality of character models to be displayed;
   motion data memory means for storing motion data of each of the plurality of character models;
   location data memory means for storing location data of each of the plurality of character models in virtual space to be displayed;
   indication means for indicating a change in the location data of at least one of the plurality of character models;
   editing means for changing the motion data of each of the plurality of character models to be in cooperation with each other according to the predetermined parameter and the changed location data; and
   display means for displaying the plurality of character models each moving according to the changed motion data.

2. The animation creation apparatus according to claim 1,
   wherein the motion data includes a plurality of pose data at predetermined intervals showing character model movement, a series of the pose data periodically representing one motion of the character model.

3. The animation creation apparatus according to claim 2,

wherein the plurality of pose data is inputted through said indication means by a user while the character model is displayed.

4. The animation creation apparatus according to claim 1,

wherein said editing means relates the location data of each character model with the motion data of each character model, the relation between the location data and the motion data being local location data or general location data.

5. The animation creation apparatus according to claim 4,

wherein the local location data includes the same motion for all character models as a first selection item, different solo motion for each character model as a second selection item, and solo motion for one character model and interlude motion for other character models as a third selection item; and

wherein the general location data includes a correspondence relation between a location pattern for a plurality of character models and the motion data for each character model, a plurality of correspondence relations being predetermined.

6. The animation creation apparatus according to claim 1,

wherein when said indication means indicates a change of the location data of at least one character model,

said editing means selectively changes the location of other character models in proportion to the change of the location of the at least one character model.

7. The animation creation apparatus according to claim 5,

wherein said editing means selects the first selection item if the location of all character models are close to each other, selects the second selection item if the locations of each character model are dispersed, and selects the third selection item if the location of one character model is separated from the location of neighboring character models.

8. The animation creation apparatus according to claim 5,

wherein said editing means compares the location data of a plurality of character models with each location pattern of the general location data, and selects the motion data corresponding to one location pattern matched with the location data of the plurality of character models.

9. The animation creation apparatus according to claim 2,

wherein said editing means calculates a number of divisions of interpolation between every two pose data of the character model according to tempo data of the predetermined parameter, the two pose data being synchronized with the tempo data, and creates pose data of each timing corresponding to the number of divisions between every two pose data as an interpolation drawing.

10. The animation creation apparatus according to claim 9,

wherein said indication means indicates a correspondence between one character model and a channel of the sound data, and

wherein said editing means generates derived motion data for the one character model between an on-timing and an off-timing of the channel, the derived motion data including pose data.

11. The animation creation apparatus according to claim 10,

wherein said editing means interpolates a start period between the pose data of the on-timing and start pose data of the derived motion, and an end period between end pose data of the derived motion and the pose data of the off-timing.

12. The animation creation apparatus according to claim 2,

wherein said indication means indicates a correspondence between one motion data and one character model, and

wherein said editing means decides whether the location data of other character model is close to the location data of the one character model.

13. The animation creation apparatus according to claim 12,

wherein said editing means assigns the one motion data to the other character model in synchronization with a timing of the one motion data of the one character model if the location data of the other character model is close to the location data of the one character model.

14. The animation creation apparatus according to claim 13,

wherein said editing means assigns the one motion data to the other character model by shifting the timing of the one motion data of the one character model if the location data of the one character model is not close to the location data of the one character model.

15. A method for creating animation, comprising the steps of:

extracting a predetermined parameter from sound data;

storing a plurality of character models to be displayed;

storing motion data of each of the plurality of character models;

storing location data of each of the plurality of character models in virtual space to be displayed;

indicating a change in the location data of at least one of the plurality of character models;

changing the motion data of each of the plurality of character models to be in cooperation with each other according to the predetermined parameter and the changed location data; and

displaying the plurality of character models each moving according to the changed motion data.

16. A computer readable memory containing computer readable instructions, comprising:

instruction means for causing a computer to extract a predetermined parameter from sound data;

instruction means for causing a computer to store a plurality of character models to be displayed;

instruction means for causing a computer to store motion data of each of the plurality of character models;

instruction means for causing a computer to store location data of each of the plurality of character models in virtual space to be displayed.

instruction means for causing a computer to indicate a change in the location data of at least one of the plurality of character models;

instruction means for causing a computer to change the motion data of each of the plurality of character models to be in cooperation with each other according to the predetermined parameter and the changed location data; and

instruction means for causing a computer to display the plurality of character models each moving according to the changed motion data.

17. Animation creation apparatus, comprising:

figure memory means for storing at least one character model to be displayed;

motion data memory means for storing motion data of the one character model;

indication means for indicating motion of the one character;

editing means for moving the one character according to the motion data in response to the indication;

object image memory means for storing a plurality of object images to compose on the one character;

image composition means for selectively composing each of the plurality of object images on the one character in synchronization with motion of the one character; and

display means for displaying the motion of the one character on which the object image is composed.

18. The animation creation apparatus according to claim 17,

wherein the motion data includes a plurality of pose data at predetermined intervals showing character model movement, a series of the pose data periodically representing one motion of the character model; and

wherein the plurality of object images are face images of the one character corresponding to each timing of the plurality of pose data, one of the plurality of object images back the back image of the head of the one character.

19. The animation creation apparatus according to claim 18,

wherein said image composition means periodically changes each of the plurality of face images to compose the one character in synchronization with each timing of the plurality of pose data to move the one character.

20. The animation creation apparatus according to claim 19,

wherein said editing means generates camera data representing the front direction of said display means along a user's line of sight, and

wherein said image composition means decides whether the one character turns its back on the front direction according to the pose data and the camera data.

21. The animation creation apparatus according to claim 20,

wherein said image composition means composes the face image on a head plate of the one character if the one character is decided not to turn its back on the front direction, and composes the back image of the head on the head plate of the one character if the one character is decided to turn its back on the front direction.

22. The animation creation apparatus according to claim 21,

wherein said image composition means changes a direction of the head plate of the one character in order to continually face to the front direction in synchronization with each timing of the plurality of pose data.

23. The animation creation apparatus according to claim 18,

further comprising a face image extraction means for respectively extracting the face image from a series of original images each including a human, and

a back image generation means for generating the back image of the head using at least one of the plurality of face images extracted by said face image extraction means.

24. The animation creation apparatus according to claim 23,

wherein said object image memory means stores the plurality of face images as one of a plurality of face movie files, and

wherein said indication means selects one of the plurality of face movie files, the plurality of face images of the one face movie file being composed on the head plate of the one character.

25. A method for creating animation, comprising the steps of:

storing at least one character model to be displayed;

storing motion data of the one character model; indicating motion of the one character;

moving the one character according to the motion data in response to the indication;

storing a plurality of object images to compose on the one character;

selectively composing each of the plurality of object images on the one character in synchronization with motion of the one character; and

displaying the motion of the one character on which the object image is composed.

26. A computer readable memory containing computer readable instructions, comprising:

instruction means for causing a computer to store at least one character model to be displayed;

instruction means for causing a computer to store motion data of the one character model;

instruction means for causing a computer to indicate motion of the one character;

instruction means for causing a computer to move the one character according to the motion data in response to the indication;

instruction means for causing a computer to store a plurality of object images to compose on the one character;

instruction means for causing a computer to selectively compose each of the plurality of object images on the one character in synchronization with motion of the one character; and

instruction means for causing a computer to display the motion of the one character on which the object image is composed.

F I G. 1

⊘ : THE ORIGIN OF EACH OBJECT

FIG. 2

```
1    hip.x   (0.0,5.35,0.0)

2    legL1.x  (0.5,-0.85,0.0)

3    legL2.x  (0.0,-2,0.0)

4    footL.x  (0.0,-2,0.0)

5    legR1.x  (-0.5,-0.85,0.0)

6    legR2.x  (-0.0,-2,0.0)

7    footR.x  (-0.0,-2,0.0)

8    chest.x  (0.0,0.0,0.0)

9    head.x  (0.0,2.275,0.0)

10   armR1.x  (-1,1.65,0.0 )

11   armR2.x  (0.0,-1.25,0.0)

12   handR.x  (0.0,-1.25,0.0)

13   armL1.x  (1,1.65,0.0)

14   armL2.x  (0.0,-1.25,0.0)

15   handL.x  (0.0,-1.25,0.0)
```

FIG. 3

FIG. 4

FIGURE DATA MEMORY SECTION — 5

POSE CREATION SECTION — 81

POSE DATA MEMORY SECTION — 7

MOTION DATA EDITING SECTION — 82

MOTION DATA MEMORY SECTION — 6

8

FIG. 5

F I g. 6

| ORDER | POSE FILE | | NUMBER OF DIVISION |
|---|---|---|---|
| **EDITING OF MOTION** | | | ☒ |
| 1 | wap1.pse | · · · | 4 |
| 2 | wap2.pse | · · · | 4 |
| 3 | wap3.pse | · · · | 4 |
| 4 | wap4.pse | · · · | 4 |
| 5 | wap5.pse | · · · | 4 |
| 6 | wap6.pse | · · · | 4 |
| 7 | wap7.pse | · · · | 4 |
| 8 | wap8.pse | · · · | 4 |
| 9 | wap1.pse | · · · | 10 |
| 10 | | · · · | 10 |
| | | OK | CANCEL |

FIG. 7

wap1.pse $\longrightarrow$ wap2.pse $\longrightarrow$ wap3.pse $\longrightarrow$ wap4.pse $\longrightarrow$

wap5.pse $\longrightarrow$ wap6.pse $\longrightarrow$ wap7.pse $\longrightarrow$ wap8.pse $\longrightarrow$ wap1.pse

FIG. 8

EP 1 031 945 A2

```
# POSE FILE

Body {
  nparts 15
}
Part {
 id     0
 dir    0.549239 0.021340 0.835393
 up     -0.032454 0.999464 -0.004194
 pos    0.000000 0.308000 0.000000
}
Part {
 id     1
 dir    0.560114 -0.305377 0.770076
 up     0.459378 0.888058 0.018035
 pos    -0.518209 -0.609804 0.381773
}
Part {
 id     2
 dir    0.575887 -0.236317 0.782629
 up     0.457741 0.886391 -0.069174
 pos    -1.207795 -1.945265 0.331440
}
```

THE REST IS OMITTED

- - - - - - - - - -

FIG. 9

```
# MOTION FILE

Motion {
   npose 9
}
Pose {
 id      0
 div     4
 fname      "wap1.pse"
}
Pose {
 id      1
 div     4
 fname      "wap2.pse"
}
Pose {
 id      2
 div     4
 fname    "wap3.pse"
}


THE REST IS OMITTED
- - - - - - - - - -
```

FIG. 10

array[x][y]

FIG. 11

array[x][y]

FIG. 12

FIG. 13

SAME   DANCE

1    | * * *.mtn |

2    | * * *.mtn |

3    | * * *.mtn |

SOLO   DANCE

A    | * * *.mtn |

B    | * * *.mtn |

C    | * * *.mtn |

INTERLUDE  DANCE

1    | * * *.mtn |

2    | * * *.mtn |

F I G. 14

LOCATION PATTERN

1

A | *  *  *.mtn |
B | *  *  *.mtn |
C | *  *  *.mtn |

2

A | *  *  *.mtn |
B | *  *  *.mtn |
C | *  *  *.mtn |

3

A | *  *  *.mtn |
B | *  *  *.mtn |
C | *  *  *.mtn |

A | *  *  *.mtn |
B | *  *  *.mtn |
C | *  *  *.mtn |

THE OTHER

FIG. 15

INITIAL STATUS OF LOCATION

FIG. 16A

"A" IS MOVED BY ↓ KEY

FIG. 16B

id=1

MOVE FIGURE id (A)

array[x[id]][y[id]]=id
array[x_org[id]][y_org[id]]=0

S171

id++ S172

CALCULATE NUMBER Nb OF LATTICE POINTS NEIGHBORING FIGURE id S173

DETERMINE A MOVABLE LATTICE POINT OF FIGURE id BY POSSIBILITY $\frac{1}{Nb}$ S174

MOVE THE FIGURE id TO THE MOVABLE LATTICE POINT

array[x[id]][y[id]]=id
array[x_org[id]][y_org[id]]=0

S175

If id > 2 S176

No

Yes

END

F I G. 17

FIG. 18

e=0
id=1

ARE THERE OTHER FIGURES NEIGHBORING THE FIGURE id ? — S191

No

Yes

FIGURE id IS SOLO DANCE
id_solo=id — S193

e++
id++ — S192

id++

If id>3

No

Yes

e=3 → SAME DANCE FOR ALL FIGURES

e=2 → INTERLUDE DANCE EXCEPT FOR id_solo FIGURE

e=0 → SOLO DANCE FOR ALL FIGURES

FIG. 19

EP 1 031 945 A2

F I G. 20

F I G. 21

F I G. 22

34

SOUND DATA

OBTAIN TEMPO DATA — S231

id=1

CALCULATE NUMBER OF DIVISION OF INTERPOLATION — S232

CALCULATE POSE OF THE INTERPOLATION — S233

id++

If id>3

No

Yes

TIMER

UPDATE THE DRAWING — S234

FIG. 23

ONE PERIOD OF MOTION

N

P1   P2   P3   P4   P5   P6   P7   P8   P1

Tdiv = 60000 (ms) / 120
     = 500 (ms)

⊘ : POSE SYNCHRONIZED WITH TEMPO

TIME

FIG. 24

EP 1 031 945 A2

FIG. 25

FIG. 26

SOUND
DATA

S271

OBTAIN TEMPO DATA AND
CHANNEL DATA

id＝1

IS
CHANNEL RELATED
WITH FIGURE id
TURNED ON ?

S272

No

CALCULATE NUMBER OF
DIVISION OF INTERPOLATION

S274

Yes

S273

CALCULATE POSE of
THE INTERPOLATION

S275

TIMER

DERIVE MOTION RELATED WITH FIGURE id

id++

If id＞3

No

Yes

UPDATE THE
DRAWING

FIG. 27

EP 1 031 945 A2

DERIVED MOTION

Pd1   Pd2   Pd3   Pd4

INTERPORATION
A
2

MOTION SYNCHRONIZED WITH TEMPO

P1   P2   Pe

CHANNEL ON

INTERPORATION
B
2

MOTION SYNCHRONIZED WITH TEMPO

Ps   P8   P1

TIME

F I G. 28

FIG. 29

KEY                          MOTION FILE

| H | ***.mtn |

| J | ***.mtn |

| K | ***.mtn |

| L | ***.mtn |

| OK | CANCEL |

F I G. 30

id=1

ASSIN THE MOTION X RELATED WITH OPERATION TO FIGURE id(=1) — S311

id++

IS THERE FIGURE 1 NEIGHBORING THE FIGURE id ? — S312

No

Yes

IS THERE THE FIGURE 1 AT array [x[id]+1][y[id]] OR array [x[id]-1][y[id]] ? — S313

No

Yes

delay=0
ASSIGN THE MOTION X TO FIGURE id — S314

delay=1
ASSIGN THE MOTION X TO FIGURE id — S315

If id>2

No

Yes

END

FIG. 31

FIG. 32

EP 1 031 945 A2

SOUND → | SOUND DATA EXTRACTION SECTION | $^1$

| SOUND DATA OUTPUT SECTION | $^2$

| LOCATION DATA MEMORY SECTION | $^3$

| FACE IMAGE MEMORY SECTION | $^{50}$

| EDITING SECTION | $^4$

| DRAWING SECTION | $^9$

| DISPLAY SECTION | $^{10}$

| FIGURE DATA MEMORY SECTION | $^5$

| MOTION DATA MEMORY SECTION | $^6$

| POSE DATA MEMORY SECTION | $^7$

| MOTION DATA CREATION SECTION | $^8$

FIG. 33

000.bmp

001.bmp

002.bmp

Back000.bmp

FIG. 34

```
# FACE MOVIE FILE

FMV {
   nframe  10
}
Frame {
   id   0
   fname  "000.bmp"
}
Frame{
   id   1
   fname  "001.bmp"
}
Frame{
   id   2
    fname  "002.bmp"
}
        ...............

        OMISSION

        ...............


Frame{
   id   9
    fname  "009.bmp"
}
BackFrame{
   id   0
    fname  "Back000.bmp"
}
```

FIG. 35

FIG. 36

CHARACTER FILE

```
* * *. chr
```

FMV FILE

```
* * *. fmv
```

| OK | CANCEL |

F I G. 37

FIG. 38A

FIG. 38B

FIG. 38C

OBTAIN POSE DATA AND CAMERA DATA — S391

If c < 10 — S392

No → c = 0 — S393

Yes

DOES THE BACK OF HUMAN MODEL FACE TO CAMERA ? — S394

TIMER

No → TEXTURE-MAPPING OF C-th FACE IMAGE TO PLATE — S395

Yes → TEXTURE-MAPPING OF THE BACK IMAGE OF THE HEAD TO PLATE — S396

CHANGE DIRECTION OF PLATE — S397

C ++

UPDATE THE DRAWING

F I G. 39

FIG. 40

FIG. 41

FIG. 42

Figure blocks:
- 1 SOUND DATA EXTRACTION SECTION
- 2 SOUND DATA OUTPUT SECTION
- 3 LOCATION DATA MEMORY SECTION
- 4 EDITING SECTION
- 5 FIGURE DATA MEMORY SECTION
- 6 MOTION DATA MEMORY SECTION
- 7 POSE DATA MEMORY SECTION
- 9 DRAWING SECTION
- 10 DISPLAY SECTION
- 50 FACE IMAGE MEMORY SECTION
- 60 FACE IMAGE EXTRACTION SECTION
- 61 BACK IMAGE GENERATION SECTION

SOUND